# EUROPEAN PATENT APPLICATION

(11) **EP 1 855 216 A2**
(43) Date of publication of application: **14.11.2007**
(21) Application number: 07108044.4
(22) Date of filing: 11.05.2007
(51) Int. Cl.: G06F 17/30

(54) **System, device, method, and program for segmenting radio broadcast audio data**

(30) Priority: 12.05.2006 JP 2006133575
(71) Applicant: Sony Corporation, Minato-ku Tokyo 108-0075 (JP)
(72) Inventor: Takatsuka, Susumu, Tokyo 108-0075 (JP)
(74) Representative: Körber, Martin Hans

(57) **Abstract**

The present invention relates to radio broadcast systems. When a user becomes interested in a song while the user is listening to a radio broadcast, the search system causes a device called bookmarker to store time information about the song which is later transferred to a search server. The search server retains broadcast songs and other data together with their broadcast date/time and other relevant information, conducts a search using the transferred time information as a search criterion, and returns a search result to the gateway device.
Within the storage section of the broadcast system a process for segmenting the audio content data in units of intervals is then performed. Segmentation information is generated in accordance with the results of the segmentation process. Further, the storage section stores audio content metadata, which includes the segmentation information, in association with the audio content data. As described, the present invention can manage audio content data in units of intervals, obtained by subdividing the audio content data in intervals.

## Description

### CROSS REFERENCES TO RELATED APPLICATIONS

The present invention contains subject matter related to Japanese Patent Application JP 2006-133575 filed in the Japan Patent Office on May 12, 2006, the entire contents of which being incorporated herein by reference.

### BACKGROUND OF THE INVENTION

### 1. Field of the Invention

The present invention relates to an information processing system that is composed of a single device or a plurality of devices. The invention also relates to a terminal device that serves as a component of the information processing system when it is composed of a plurality of devices. The invention further relates to an information processing method for use with the information processing system and the terminal device and to a program that is executed by a device included in the information processing system.

### 2. Description of the Related Art

The configuration of a search system based on a radio broadcast is described, for instance, in Japanese Patent Laid-open No. 2001-125914. When, for instance, a user becomes interested in a song while the user is listening to a radio broadcasts, this search system causes a device called a bookmarker to store, for instance, time information about the song. At a later time, the search system transfers the time information stored in the bookmarker to a search server through a gateway device (e.g., personal computer). The search server retains broadcast songs and other data together with their broadcast date/time and other relevant information, conducts a search using the transferred time information as a search criterion, and returns a search result to the gateway device. When, for instance, the returned search result is audio data for a song, the gateway device reproduces and outputs it.

### SUMMARY OF THE INVENTION

Under circumstances where content is offered by broadcast or other means and enjoyed by users, there is a need for a system that is capable of generating increased added value in terms of convenience and entertainment.

In view of the above circumstances, there is provided an information processing system including a storage section, a separation section, an interval related information generation section, a control section, and a content data management section. The storage section is configured to store content data. The separation section is configured to perform an analysis process on the content data stored in the storage section and separate the content data into interval data accordingly. The interval related information generation section is configured to generate interval related information, which describes the interval data that constitutes the content data. The control section is configured to exercise control so that the storage section stores content data related information containing at least one of pieces of the interval related information in association with content data. The content data management section is configured to manage the content data stored in the storage section in accordance with the content data related information.

In a situation where the configuration described above is employed, first of all, the storage section stores at least content data as a type that is to be stored in the unit of storage data. A process for separating the content data in the unit of interval data is then performed. The interval related information is generated in accordance with the result of the separation process. Further, the same storage section stores content data related information, which includes the interval related information, in association with the content data. The content data stored in the storage section is managed in accordance with the interval related information.

It is assumed that the storage section manages stored data in the unit of storage data. It basically means that the unit of storage data cannot be managed when it is subdivided. Therefore, the content data, which is stored in the unit of storage data, cannot be managed when it is subdivided. However, the present invention manages the content data stored in the storage section in accordance with the content data related information, which contains the interval related information. Consequently, the content data can be separated into intervals, divided (classified), and managed in the unit of interval data that is indicated by the interval related information contained in the content data related information.

As described above, the present invention can manage the content data in the unit of interval data, which is obtained by subdividing the content data. Therefore, the content data can be managed more variedly than when the content data is a minimum unit of management. Since management can be exercised in various manners, the content data can be reproduced, managed, or otherwise handled, for instance, to provide increased convenience and enhanced entertaining capabilities. This makes it possible, for instance, to provide an information processing system having increased added value.

### BRIEF DESCRIPTION OF THE DRAWINGS

FIG. 1 shows a typical system configuration according to an embodiment of the present invention;
FIG. 2 shows a typical configuration of a personal computer that is a part of a system according to an embodiment of the present invention;
FIG. 3 shows a typical configuration of a mobile terminal device that is a part of the system according to an embodiment of the present invention;
FIG. 4 schematically shows an example illustrating how the system according to an embodiment of the present invention manages the contents of a radio file;
FIG. 5 shows a typical structure of chapter management information according to an embodiment of the present invention;
FIG. 6 is a flowchart illustrating a typical procedure for creating chapter management information in the personal computer;
FIG. 7 shows a typical structure of radio file management information according to an embodiment of the present invention;
FIG. 8 shows an example illustrating how a basic radio file list is displayed;
FIG. 9 shows an example illustrating how a filed chapter list is displayed;
FIG. 10 shows another example illustrating how the filed chapter list is displayed;
FIG. 11 shows an example illustrating how a genre-specific chapter count list is displayed;
FIG. 12 shows an example illustrating how a genre-based chapter list is displayed;
FIG. 13 shows an example illustrating how an artist-specific chapter count list is displayed;
FIG. 14 shows a typical structure of a radio file list table;
FIG. 15 shows a typical structure of a genre list table;
FIG. 16 shows a typical structure of an artist list table;
FIG. 17 is a flowchart illustrating a typical procedure for creating list tables;
FIG. 18 is a flowchart illustrating a typical procedure for displaying a list image related to a radio file; and
FIG. 19 is a flowchart illustrating a typical procedure for reproducing a radio file.

### DETAILED DESCRIPTION OF THE PREFERRED EMBODIMENT

A preferred embodiment of the present invention will now be described.

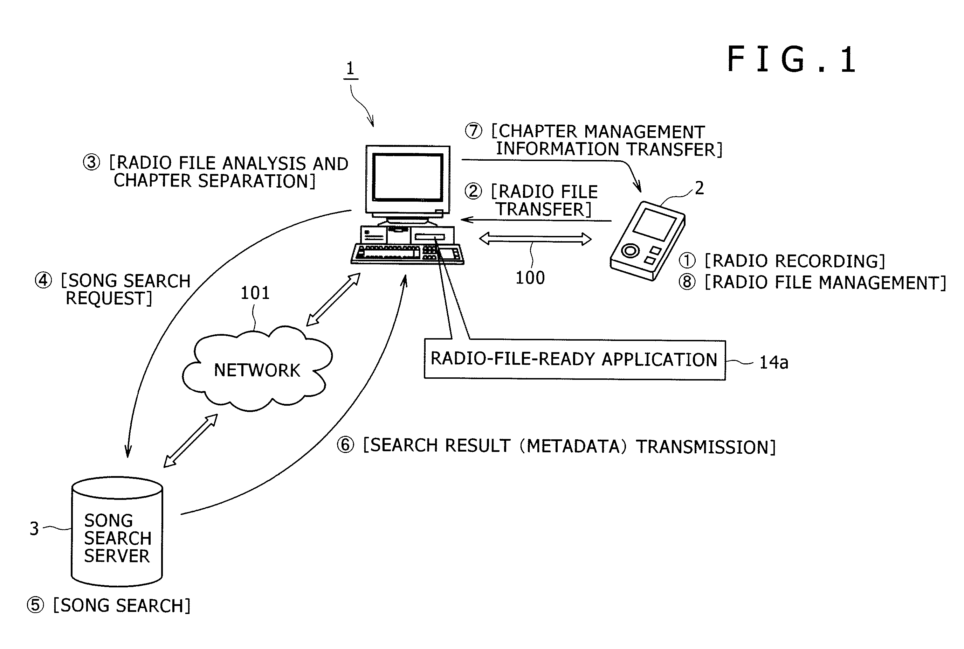

FIG. 1 shows an information processing system according to the present embodiment. The information processing system includes a personal computer 1, a mobile terminal device 2, and a song search server 3. Within an information processing system according to an embodiment of the present invention, the personal computer 1 serves as a host device whereas the mobile terminal device 2 serves as a terminal device (client) for the host device. In FIG. 1, the song search server 3 is added to the basic configuration mentioned above.

Referring to FIG. 1, the outline and a typical use of the information processing system according to the present embodiment will now be described. The typical use will be explained below with reference to procedure numbers that are circled in FIG. 1.

### [Procedure 1]

The mobile terminal device 2 has a body that weighs and is sized to permit a user to carry it easily. The mobile terminal device 2 has a storage medium, which is located, for instance, inside its body. The storage medium is such that a predetermined file system, for example, manages stored data in the unit of a file (in the unit of storage data). The storage medium can store a content file, which is obtained, for instance, by filing at least audio content data (audio data). The user can perform a predetermined procedure for the mobile terminal device 2 to reproduce the content file stored on the storage medium and output a reproduced sound, for instance, from a headphone or earphone connected to a headphone jack on the body of the mobile terminal device 2.

The mobile terminal device 2 can incorporate a radio tuner that can receive a radio broadcast from a predetermined carrier, modulate the radio broadcast, and output its audio signal, for instance, from the headphone jack.

Further, the mobile terminal device 2 can store radio broadcast audio, which is received and modulated as described above, on the internal storage medium as a content file that includes audio data content. Procedure 1, which is explained as a typical use, is performed to let the user record a radio broadcast. In other words, the user performs a predetermined procedure to store a received and selected radio broadcast on the storage medium as a content file. A content file obtained by storing audio data that is acquired by receiving and selecting a radio broadcast may be hereinafter referred to as a radio file (content data).

When using the mobile terminal device 2 to record a radio file, the user may perform a recording start procedure and recording stop procedure in real time or perform a programmed recording procedure, which is a recording operation automatically performed after at least a receiver frequency, recording start time, and recording stop time are specified by the user.

It is assumed that the audio information contained in a radio file that is stored as described above is an interrupted sequence of broadcast audio. The audio included in a common radio broadcast can be divided into certain content types (content types that are reproduced and output). The audio included, for instance, in an FM broadcast, which is generally based on music, can be mainly separated into talks of personalities, who guide the progress of a broadcast, and songs.

Radio files stored in the mobile terminal device 2 are managed on an individual file basis. However, if, for instance, a radio file can be managed within reference to individual intervals, that is, an interval for a talk and an interval for a song, the user can cue to the beginning of a song if the user wants to skip a personality talk and listen to the song quickly. This feature provides increased user-friendliness because it saves the user the bother of having to perform a fast-forward or rewind procedure.

Procedures 2 and beyond are used to manage the radio files stored in the mobile terminal device 2 in accordance with the intervals for various pieces of audio content.

The procedures performed to operate the personal computer 1 when Procedures 2 and beyond are followed are implemented by application software that is installed on the personal computer 1 and capable of exercising various radio-file-ready functions (radio-file-ready application 14a).

### [Procedure 2]

As described above, a radio file is stored on the storage medium for the mobile terminal device 2. Procedure 2 is then performed, for instance, by the user to start a radio-file-ready application from the personal computer 1, which serve as a host, allow a communication bus 100, which conforms to a predetermined data communication format, to interconnect the personal computer 1 and mobile terminal device 2, and transfer radio file data, which is stored in the mobile terminal device 2, to the personal computer 1 via the communication bus 100. The personal computer 1 exercises, for example, a function of the radio-file-ready application 14a to store the transferred radio file data on an internal HDD (hard disk drive) or other storage medium.

When the radio file is stored, for instance, on the HDD as described above, the radio file can be reproduced, edited, or otherwise used on the personal computer 1 (radio-file-ready application 14a). However, if the radio file need not be used in such a manner, the transferred data may be simply written in a RAM or other main storage device for storage purposes. As is obvious from the subsequent explanation, the typical use provided by the procedures shown in the figure can be implemented when the personal computer 1 stores the transferred data in the RAM without storing it on the HDD.

### [Procedure 3]

Procedure 3 is performed so that the radio-file-ready application 14a analyzes audio data contained in the radio file, which was stored in the personal computer 1 by performing Procedure 2. In other words, the radio-file-ready application 14a includes a program for performing an audio analysis process that is described below.

The analysis process is performed to determine whether the content (reproduced and output content) that is audible to a listener when the audio data in the radio file is reproduced and output is a normal speaking voice or conversation or a song. In accordance with the result of the analysis process, the audio data in the radio file is separated into a talk interval and a song interval.

Subsequently, intervals that are defined when the reproduced and output content is analyzed to determine whether it is a talk or song will be referred to as "chapters." When the reproduced and output content of a chapter is a talk, the chapter will be referred to as a talk chapter. When the reproduced and output content of a chapter is a song, the chapter will be referred to as a song chapter. In other words, the radio file is separated in the unit of a chapter. More specifically, the information directly obtained as a result of chapter separation (separation result information) includes at least chapter start time and reproduction content information. The chapter start time is reproduction time information that indicates chapter separation positions (divided positions) correlating to the first to last chapter numbers. The reproduction content information is information that determines whether the chapters correlating to the chapter numbers are talk chapters or song chapters.

In addition, the above analysis process is also performed to determine the genre of a chapter that is recognized as a song chapter. In other words, information indicating the genre of a song chapter is also obtained.

### [Procedure 4]

Depending on Procedure 3, the obtained information about a radio file may include chapter start time and reproduction content information, which indicate that the radio file is separated into talk chapters and song chapters, and the information indicating the genre of each song chapter. It can be said that these items of information are metadata or attribute information having particular contents related to a radio file or chapters. However, Procedures 4 to 6 are the procedures for allowing, for instance, the radio-file-ready application 14a to acquire more metadata about the radio file and chapters, which are to be analyzed, from the song search server 3.

As Procedure 4, the function of the radio-file-ready application 14a is exercised so that the personal computer 1 issues a song search request, for instance, through a network 101. This song search request is issued to search for the metadata about a song in a song chapter that is obtained when the radio file is separated by performing Procedure 3.

Therefore, the personal computer 1 extracts a leading portion of the audio data in the song chapter, which corresponds to a predetermined reproduction time, handles the extracted data as search criterion data, and transmits the search criterion data together with the search request.

### [Procedure 5]

Procedure 5 is performed so that the song search server 3 receives the search request, which is transmitted from the personal computer 1 as described above, and conducts a search.

The song search server 3 stores a song database in which introduction data (a predetermined length of time of audio data representing an introduction) of a song is associated with predetermined metadata about the song.

The song search server 3 then searches the song database for introduction data that matches the audio data that was transmitted together with the search request as the search criterion data when Procedure 4 was performed, and extracts from the song database the metadata that is associated with the retrieved introduction data. The metadata extracted in the above manner is used as a search result that is to be output in response to the search request.

In other words, the song search described above uses audio data itself as a search criterion, specifies a song that is stored in the song database, and acquires the metadata about the specified song.

Types of metadata about each song stored in the song database should not be specifically limited. For brevity of explanation, however, it is assumed that the metadata is merely composed of title information and artist information. The title information indicates the title (song name) of the associated song. The artist information indicates the name of an artist (performer) that performs the associated song.

The song search server 3 may search for songs by using a previously proposed or implemented technology or by using a technology that is proposed and adopted in the future.

The present embodiment recognizes the genre of a song chapter by causing the personal computer 1 to perform an analysis process as described earlier. However, if the song database contains genre information as the metadata, the personal computer 1 does not have to recognize the genre of a song when it performs the analysis process.

### [Procedure 6]

Procedure 6 is performed so that the metadata (title information and artist information), which is a search result obtained through Procedure 5, is returned to the personal computer 1 via the network 101.

### [Procedure 7]

Upon receipt of the metadata, which was transmitted through Procedure 6, the radio-file-ready application 14a in the personal computer 1 acquires the title information and artist information in the form of metadata about each song chapter and as a search result for the search request. At this stage, therefore, the separation result information (which includes chapter start time and reproduction content (song/talk) information correlating to chapter numbers), which is derived from the analysis made through Procedure 3 and indicates that a radio file is divided into chapters (talk chapters and song chapters), the genre information about song chapters, and the aforementioned title information and artist information are obtained as the metadata about the radio file.

Thus, Procedure 7 is performed so that chapter management information (interval related information) having a predetermined structure is created by using the separation result information, which is the metadata obtained as described above, and the genre information, title information, and artist information about each song chapter, and transferred to the mobile terminal device 2 via the communication bus 100.

The above description assumes that a search request is immediately issued to the song search server 3 when the title information and artist information are to be acquired. However, the radio-file-ready application 14a, for example, may include a song database (stored on a HDD) having the same structure as that is possessed by the song search server 3 so that the personal computer 1 also completes a process for searching for and acquiring the title information and artist information. An alternative would be to use the song search server 3 as well as the song database possessed by the radio-file-ready application 14a. For example, the radio-file-ready application 14a may access and search the song database stored on the HDD in the personal computer 1. If the radio-file-ready application 14a retrieves the metadata about a song that matches the introduction data of a song chapter, which is selected as a search criterion, as a search result, the retrieved metadata may be used. If the metadata is not retrieved, on the other hand, the radio-file-ready application 14a may connect to the song search server 3 again and transmit a search request.

### [Procedure 8]

When Procedure 7 is completed, the mobile terminal device 2 receives and acquires the chapter management information, which is transmitted from the personal computer 1. The chapter management information is created by the radio-file-ready application 14a installed on the personal computer 1 in accordance with the radio file transferred from the mobile terminal device 2. Therefore, the chapter management information correlates to one of the radio files stored on the storage medium for the mobile terminal device 2.

For example, the mobile terminal device 2 converts the chapter management information, which is received and acquired, as needed into a predetermined structure, and incorporates the converted chapter management information into radio file management information as described later. The radio file management information includes predefined metadata that correlates to a radio file stored on the storage medium for the mobile terminal device 2. A typical structure of the radio file management information will be described later. The radio file management information is to be also stored on the storage medium for the mobile terminal device 2.

Procedure 8 is performed so that the mobile terminal device 2 uses the radio file management information to display a list, reproduce a file, and exercise various other management functions concerning the radio file. Since the radio file management information includes the chapter management information, which is received and acquired from the personal computer 1, radio file management based on Procedure 8 is exercised so that management can be exercised on an individual chapter basis (chapter management). An example of chapter management of a radio file will be described later.

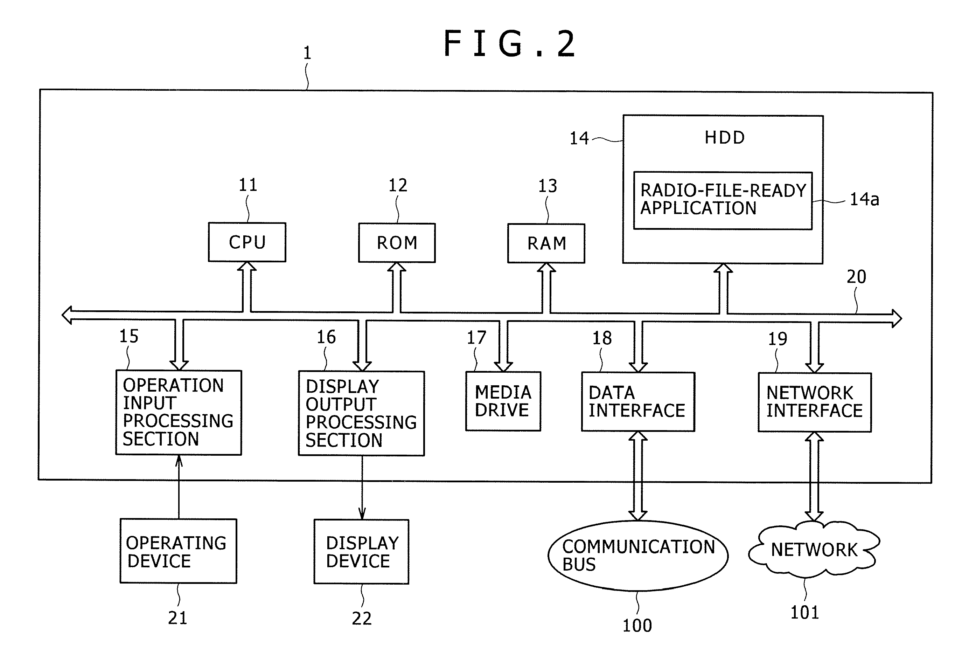

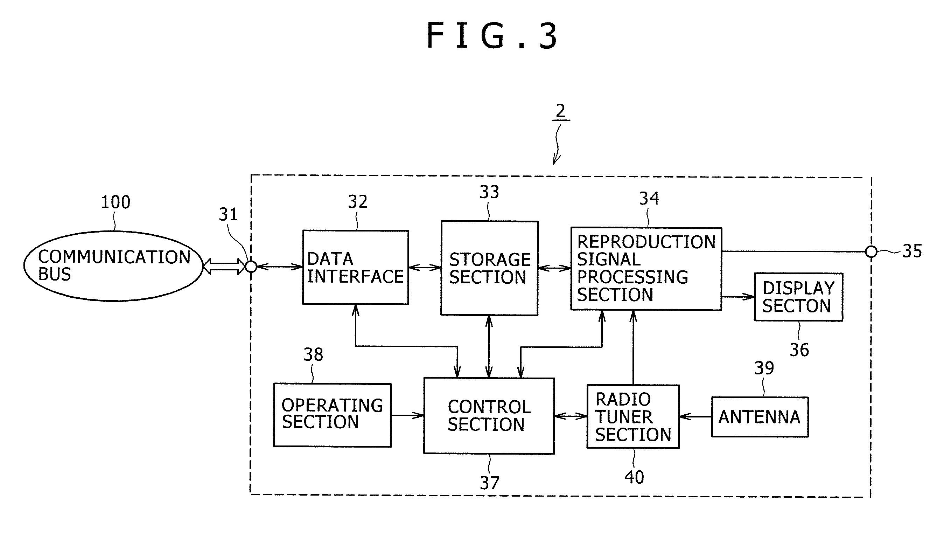

A typical technical configuration for exercising radio file management on an individual chapter basis as described above will now be described. First of all, typical configurations of the personal computer 1 and mobile terminal device 2 will be described with reference to FIGS. 2 and 3.

FIG. 2 shows a typical configuration of the personal computer 1 that is shown in FIG. 1. The personal computer 1 shown in FIG. 2 includes a CPU 11, a ROM 12, a RAM 13, a HDD (hard disk drive) 14, an operation input processing section 15, a display output processing section 16, a media drive 17, a data interface 18, and a network interface 19, which are interconnected via an internal bus 20.

The CPU (Central Processing Unit) 11 loads, for instance, a program stored in the ROM 12 and an application program stored on the HDD 14 into the RAM 13, which is a storage device, and executes them. The RAM 13 also stores as needed data that is necessary for the CPU 11 to perform various processes. Although the ROM 12 is usually nonrewritable, the employed configuration may include a flash memory or other nonvolatile rewritable memory element.

The HDD 14 is an auxiliary storage device for the personal computer. Various programs that the CPU 11 executes as described above are stored on the HDD 14 for installation purposes. The HDD 14 also stores, for instance, various application files. The data stored on the HDD 14 in this manner are managed, for instance, by a file system. The CPU 11 can write data onto and read data from the HDD 14 by making use, for instance, of the file system.

The figure indicates that the data stored on the HDD 14 includes the radio-file-ready application 14a, which is a program. As described with reference to FIG. 1, the radio-file-ready application 14a reads a radio file from the mobile terminal device 2, generates chapter management information about the read radio file, and returns the generated chapter management information to the mobile terminal device 2. The radio-file-ready application 14a may be configured to be capable of managing a radio file stored on the HDD 14 in accordance with the radio file management information as is the case with the mobile terminal device 2, which will be described later.

The operation input processing section 15 inputs a signal that is output from an operating device 21 in accordance with an operation, converts the input signal to an instruction that can be processed by the CPU 11, and outputs the instruction to the CPU 11. The CPU 11 performs a process in accordance with the instruction. The operating device 21 is a mouse, a keyboard, or any other operation input device that the user uses to operate the personal computer.

The display output processing section 16 performs a process for causing a display device 22 to display an image in accordance with control exercised, for instance, by the CPU 11. In the present embodiment, for example, the display device 22 also displays a GUI (Graphical User Interface) of the radio-file-ready application 14a.

In the present circumstances, the media drive 17 is compatible with CD-ROMs, DVDs, standard removable semiconductor memories, or other particular types of media, and capable of reading and writing data onto such media. Control for permitting such data reads and writes is also exercised by the CPU 11.

The data interface 18 is a component in which hardware and software are implemented to let the personal computer 1 communicate with an external device via the communication bus 100, which conforms to a predetermined data communication method. The data interface 18 compatible with the communication bus 100 connects the mobile terminal device 2 according to the present embodiment to the personal computer 1 and allows the mobile terminal device 2 to communicate with the personal computer 1.

The network interface 19 is a component that implements an interface function for establishing communication through the Internet, LAN (Local Area Network), or other network 101. In the present circumstances, the network interface 19 is configured in compliance, for instance, with a standard such as Ethernet (registered trademark). It is also conceivable that the network interface 19 may be configured in compliance with a wireless LAN standard such as IEEE 802.11a/b/g/n. If a telephone line is used to establish the connection to the Internet, the network interface 19 is configured to include a modem or the like.

A typical internal configuration of the mobile terminal device 2 will now be described with reference to FIG. 3.

The mobile terminal device 2 shown in FIG. 3 includes a data input/output terminal 31, a data interface 32, a storage section 33, a reproduction signal processing section 34, an audio output terminal 35, a display section 36, a control section 37, an operating section 38, an antenna 39, and a radio tuner section 40.

The data interface 32 is a functional circuit that contains a hardware configuration for data communication with the data interface 18 for the personal computer 1. In other words, when a cable conforming to the employed data communication standard is actually connected between the data input/output terminal 31, which is connected to the data interface 32, and the data input/output terminal for the data interface 18 on the personal computer side, the personal computer 1 and mobile terminal device 2 can communicate with each other via the communication bus 100.

The radio file transfer from the mobile terminal device 2 to the personal computer 1 and the chapter management information transfer from the personal computer 1 to the mobile terminal device 2, which were described with reference to FIG. 1, are accomplished when the data interface 32 is connected to the data interface 18 for the personal computer 1 via the communication bus 100.

The standard to which the data interface 22 and the data input/output terminal 21 conform is not specifically defined. In the present circumstances, however, the standard may be, for instance, USB (Universal Serial Bus) or IEEE 1394. Further, the data communication standard for short-distance wireless communication may be employed as the data interface standard. If such a data communication standard is employed, the data input/output terminal 21 is not necessary.

The storage section 33 corresponds to the storage medium for the mobile terminal device 2, which was described with reference to FIG. 1, and is mainly used for content file storage. As regards a content file according to the present embodiment, a radio file may be counted as an audio file. The storage section 33 stores chapter management information as well as a radio file.

Further, the storage section 33 can also store a program that is executed by a CPU, which forms the control section 37, and various setup information related to the program. The data in content files and other files stored in the storage section 33 are managed by the file system.

Any nonvolatile storage device that does not lose data upon power off may be actually employed as the storage section 33. In the present circumstances, however, a HDD or flash memory is widely employed, and the capacity of the employed storage device generally ranges from several hundred megabytes to several gigabytes.

Here, the term "content file" refers to an audio file containing audio, a motion picture file, a still picture file containing, for instance, a photograph or picture, and other file that is managed by a file system (e.g., FAT file system) as described above and stored on a medium. When these files are reproduced, content such as video and audio is output. The resulting output content is auditorily and visually meaningful to the user. Consequently, these files are called content files.

The reproduction signal processing section 34 is a functional circuit that contains a hardware configuration for reproducing and outputting the content stored in the storage section 33, as audio and video, in accordance with control exercised, for instance, by the control section 37. When, for instance, the content file is an audio file, the reproduction signal processing section 34 performs a decoding process as needed in accordance with an employed file compression coding method, and eventually outputs an amplified analog audio signal to the audio output terminal 35. If, for instance, the audio output terminal 35 is a headphone terminal or the like, the reproduced audio is output from a headphone, earphone, or other device connected to the audio output terminal 35.

When, on the other hand, the content file is an image file such as a video (motion picture) file or still picture file, the reproduction signal processing section 34 performs a decoding process on image data as needed in accordance with an employed compression coding method, performs predetermined signal processing and the like for image display, and causes the display section 36 to display an image. If, for instance, the content file contains audio information in addition to image information, the reproduction signal processing section 34 performs a reproduction signal process on the audio information in addition to the reproduction signal process on the image information, causes the display section 26 to display an image, and causes the audio output terminal 35 to output an audio signal with proper timing.

The radio tuner section 40 inputs a broadcast wave signal having a predetermined carrier frequency, which is received by the antenna 39, and selects a channel in accordance, for instance, with instructions from the control section 37. Further, the radio tuner section 40 performs, for instance, a detection process and demodulation process on a signal that is obtained upon channel selection. Finally, the radio tuner section 40 outputs digital audio data to the reproduction signal processing section 34. Thus, the mobile terminal device 2 according to the present embodiment can cause the audio output terminal to output the audio data, which is obtained when signal reception and channel selection are performed by the radio tuner section 40. Further, the audio data can be converted into an audio file format and stored in the storage section 33. Radio broadcast audio information, which is stored in the storage section 33 in the audio file format as described above, is handled as a radio file by the present embodiment. In other words, the user can operate the operating section 38 in a predetermined manner to listen to a radio broadcast that is received and tuned in to by the mobile terminal device 2 and record the received and tuned-in-to radio broadcast as a radio file.

In accordance, for instance, with control exercised by the control section 37, the display section 36 displays a predetermined user interface image representing the operation status of the mobile terminal device 2 or an operation performed relative to the operating section 38. The display section 36 also displays an image that is obtained when a content file in an image format is reproduced.

Any display device may be employed as the display section 36. In the present circumstances, for example, a liquid-crystal display device that is driven by a matrix method and of a predetermined size may be employed.

The control section 37 includes a microcomputer, which includes, for instance, a CPU, a ROM, and a RAM, and performs various control processes in the mobile terminal device 2. A content file management function is implemented within the mobile terminal device 2 when the control section 37 (CPU) executes a program stored, for instance, in the ROM or storage section 33.

The operating section 38 includes various operators for the mobile terminal device 2 and a section that generates and outputs signals (operation signals) according to operations performed relative to the operators. In accordance with an operation signal that is input from the operating section 38, the control section 37 performs a predetermined control process.

The system according to the present embodiment that includes the mobile terminal device 2 and personal computer 1, which are configured as shown in FIGS. 2 and 3, and the song search server 3, as described with reference to FIG. 1 can manage a radio file, which is recorded and stored in the mobile terminal device 2, in such a manner that the radio file is separated into song chapters and talk chapters.

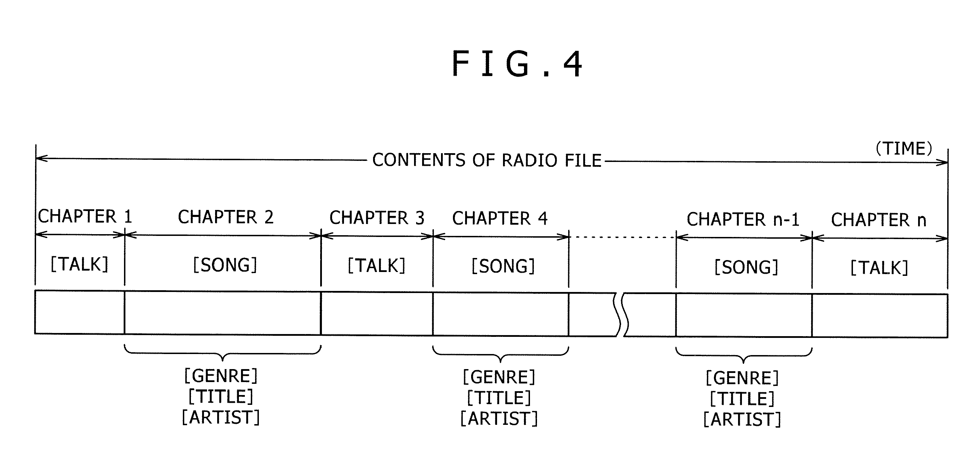

FIG. 4 shows an example of management that is exercised in relation to chapters of a radio file.

The contents of the radio file (i.e., the contents of audio data) shown in FIG. 4, which are to be reproduced and output, are managed in such a manner that the radio file is separated into n chapters including chapter 1, which is the first chapter, and chapter n, which is the last chapter. In the example shown in the figure, chapters 1, 3, and n are managed as "talk" chapters whereas chapters 2, 4, and n-1 are managed as "song" chapters.

Further, each "song" chapter is managed so that the genre information derived from the audio analysis process performed by the personal computer 1 and the title and artist information retrieved by the song search server 3 are associated with each other as the meta about a song.

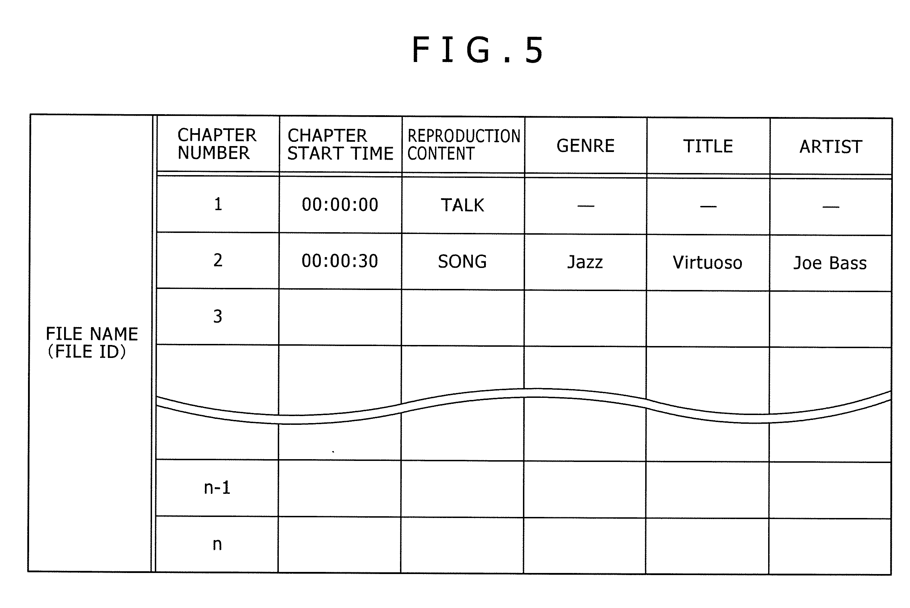

It is conceivable that the chapter management information, which is the management information for managing a radio file shown in FIG. 4 on an individual chapter basis (for exercising chapter management), may have a structure that looks like FIG. 5.

The structure of chapter management information shown in FIG. 5 relates to a radio file. First of all, the chapter management information has a file name as a file ID of the radio file. Then, chapter numbers (1 to n) are prepared to represent chapters 1 to n, which are obtained as a result of radio file separation into chapters. Further, each registered chapter number is associated with chapter start time, reproduction content, genre, title, and artist information (metadata) about a chapter.

The chapter start time indicates the time at which the associated chapter begins within the audio data in the radio file.

The reproduction content is information that indicates whether the content recognized by the audio analysis process is a song or talk, that is, indicates whether the content is a song chapter or talk chapter.

The information about the chapter start time and reproduction content is based on the separation result information derived from the audio analysis process, which was described earlier.

The genre indicates the genre of a chapter that is recognized by the audio analysis process. The information about the title and artist indicates the title and artist name of a song, which is contained in a chapter and retrieved by the song search server 3. The genre, title, and artist, which are the metadata associated with a chapter number, are associated with song chapters only. Therefore, no valid information about the genre, title, and artist is stored for chapters whose reproduction content is a talk.

The chapter management information having the structure described above may be considered the same as the chapter management information that is created in the personal computer 1 by performing Procedure 7 and transferred to the mobile terminal device 2 as described with reference to FIG. 1.

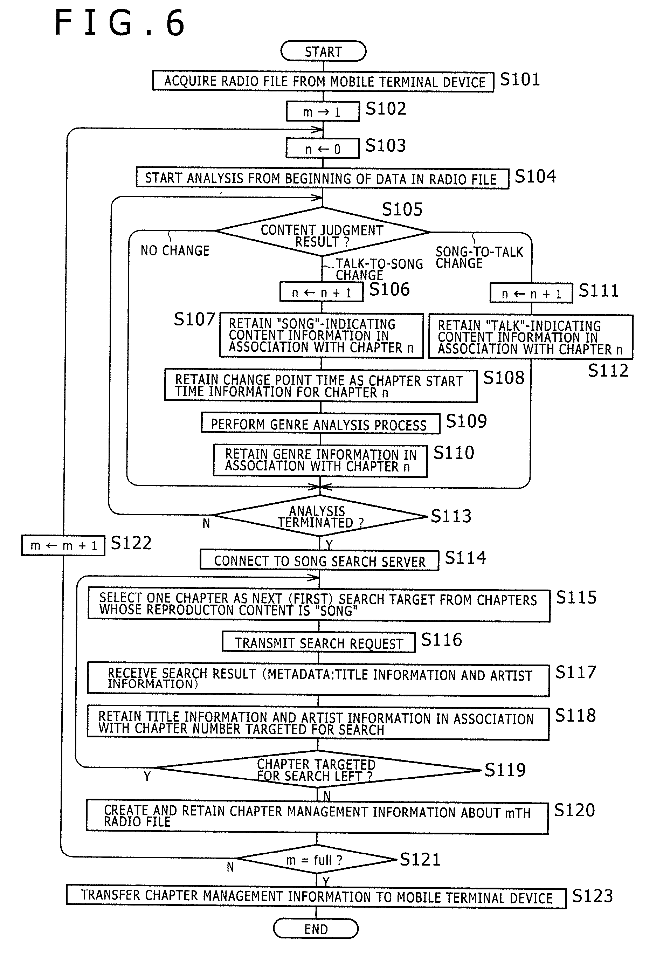

Typical processing steps that the personal computer 1 performs to create the chapter management information shown in FIG. 5 will now be described with reference to a flowchart in FIG. 6.

The processing steps shown in FIG. 6 correlate to the operations performed by Procedures 2, 3, 4, 6, and 7, which were described with reference to FIG. 1. The processing steps shown in FIG. 6 are performed when the CPU 11 in the personal computer 1 executes a program contained in the radio-file-ready application 14a.

It is assumed that the personal computer 1 and mobile terminal device 2 are interconnected via the communication bus 100 to communicate with each other while the processing steps shown in FIG. 6 are performed. Further, since the processing steps shown in FIG. 6 are performed by the radio-file-ready application 14a, it is also assumed that the radio-file-ready application 14a is running on the personal computer 1.

Further, it is assumed in the above circumstances that, for instance, the user issues an instruction to the radio-file-ready application 14a, which is running on the personal computer 1, for exercising chapter management over radio files stored in the mobile terminal device 2 that have not been subjected to chapter management, that is, radio files whose radio file management information does not include chapter management information.

In response to the issued instruction, the radio-file-ready application 14a performs step S101 to acquire radio files from the mobile terminal device 2. In other words, the radio-file-ready application 14a performs an operation that corresponds to Procedure 2 in FIG. 1. To perform this step, the radio-file-ready application 14a sends a request to the mobile terminal device 2 through the communication bus 100 to acquire radio file data that has not been subjected to chapter management.

In compliance with the request, the mobile terminal device 2 searches the storage section 33, which stores radio files, to retrieve radio files that have not been subjected to chapter management. When conducting this search, the mobile terminal device 2 has to examine content files stored in the storage section 33 and distinguish between radio files and non-radio files, and has to distinguish between radio files that have been subjected to chapter management and radio files that have not been subjected to chapter management. However, this process can be completed, for instance, by referencing the radio file management information that is structured as described later.

When radio files that have not been subjected to chapter management are retrieved, the mobile terminal device 2 reads data in the radio files from the storage section 33, and transmits the read data to the personal computer 1 (radio-file-ready application 14a) through the data interface 32 and communication bus 100.

Step S101 is then continuously followed so that the radio-file-ready application 14a transfers the transmitted radio file data to the HDD 14 for storage purposes. In the present embodiment, it is not always necessary to store the radio file data on the HDD 14 when it is transmitted from the mobile terminal device 2. However, it is assumed here that the HDD 14 stores the transmitted radio file data.

When radio file acquisition is completed as described above, the radio-file-ready application 14a performs steps S102 and beyond to acquire chapter management information about each acquired radio file.

In step S102, initialization is effected by substituting the value 1 for variable m, which corresponds to a number that is to be assigned to the radio file to be processed for chapter management information acquisition. The maximum value of variable m is equal to the total number of radio files acquired in step S101.

After completion of step S102, step S103 is performed so that initialization is effected by substituting the value 0 for variable n, which indicates a chapter number of a radio file. As indicated in FIGS. 4 and 5, a valid chapter number begins with 1. In consideration of the subsequent processing steps, however, it is assumed that the value 0 is set as an initial value.

After completion of step S103, steps S104 to S120 are performed to collect information pertinent to chapter management information for each acquired radio file and create the chapter management information. Steps S104 to S113, which constitute the first half of steps S104 to S120 and correspond to Procedure 3 in FIG. 1, are performed to analyze the audio data in a radio file, separate the radio file into song chapters and talk chapters (acquire separation result information), and obtain the genre information about each song chapter.

Step S104 is performed to start analyzing the audio data in the mth radio file, which is selected from the radio files acquired and stored on the HDD 14 in step S101 in accordance with a predetermined rule (e.g., in the order of file names). This analysis process is performed on the audio data, which is contained in the radio file in accordance with chapter separation that is performed according to the reproduction time, from the start position in terms of reproduction time to the end position.

The analysis process (audio analysis process) that is started in step S104 is based, for instance, on pattern recognition of reproduction signal waveforms of the audio data in the radio file, and performed, for one thing, to determine whether the reproduction sound derived from the audio data is a performed song or a conversation or talk of humans. If it is a performed song, the analysis process is also performed to determine the genre of the song. The present embodiment does not particularly specify the method for performing the above audio analysis process including the audio analysis process for genre recognition, which will be described later. Any known method or a method developed and used in the future may be employed as far as it is appropriate.

Since the analysis process is started in step S104 and continued subsequently, a recognition result is progressively obtained over reproduction time (at various points of time) in order to determine whether the reproduction content of the audio data is a song or talk. Step S105 is then performed at fixed time intervals or with timing appropriate for a predetermined analysis process data length to examine a currently encountered reproduction content change pattern in accordance with the above recognition result and determine whether no reproduction content change is encountered or whether a change from a talk to a song or from a song to a talk is encountered. However, when the beginning (first chapter) of the audio data is to be determined immediately after the start of the analysis process in step S104, no preceding recognition result exists. Therefore, if the data is recognized as a song, step S105 determines that a change from a talk to a song is encountered. If the data is recognized as a talk, step S105 determines that a change from a song to a talk is encountered. In other words, as far as the beginning of the audio data is recognized as a song or talk, step S105 does not determine that no change is encountered.

If the judgment result obtained in step S105 indicates that no change is encountered, processing proceeds to step S113.

If the judgment result obtained in step S105 indicates that a change from a talk to a song (a talk-to-song change) is encountered, processing proceeds to steps S106 and beyond. In the subsequent description, a chapter to which a chapter number indicated by variable n is given may also be referred to as chapter n.

In step S106, variable n is incremented by one. Steps S107 to S110 are performed to set and retain some metadata about a chapter that is numbered according to variable n. The retained metadata will be used as a material when a later step (step S119) is performed to create the chapter management information.

Step S107 is performed to retain the reproduction content information in association with a chapter number n. Here, the reproduction content information indicating a song is retained in accordance with the judgment result obtained in step S105.

In step S108, the chapter start time for chapter n is obtained in response to a change in the audio data in the radio file that is found in accordance with the judgment result obtained in step S105, and the obtained chapter start time is retained in association with a chapter number n.

When the chapter start time for chapter n is to be determined and acquired in step S108, the reproduction time for a data position (change point) at which a change from a talk to a song was encountered, which was found in step S105, should be obtained. If the procedure to be performed in step S108 relates to the first chapter (chapter 1), the reproduction time (e.g., 00 h 00 m 00 s) for the beginning of the audio data is set.

It can also be said for confirmation that steps S107 and S108 are performed to obtain the separation result information from the audio analysis process.

When processing proceeds to step S108, the content of the current chapter n is a song. Therefore, in the next step (step S109), an audio analysis process is performed for recognizing the genre of the song. When the result of genre recognition is obtained, step S110 is performed to retain genre information, which indicates the recognized genre, in association with a chapter number n.

When steps S110 and earlier are completed, processing proceeds to step S113.

If the judgment result obtained in step S105 indicates that a change from a song to a talk (a song-to-talk change) is encountered, step S111 is performed to increment variable n as is the case with step S106. After completion of step S111, step S112 is performed.

In the above instance, the current chapter n is a talk chapter. Therefore, step S112 is performed to retain the reproduction content information indicating a talk in association with chapter n. After completion of step S112, processing proceeds to step S113.

Step S113 is performed to determine whether or not the audio analysis process on the audio data in a radio file, which was started in step S104, is terminated. More specifically, step S113 is performed to determine whether or not the audio analysis process has been carried out until the end of the audio data in a radio file is analyzed. If the judgment result obtained in step S113 indicates that the audio analysis process is not terminated yet, processing returns to step S105. In this manner, chapter separation is performed in accordance with the progress in the audio data reproduction time to retain the chapter start time, reproduction content, and genre information about separated chapters until the audio analysis process is performed until the end of the audio data in a radio file is analyzed.

When the query in step S113 is answered "Yes," that is, when the judgment result obtained in step S113 indicates that the audio analysis process is carried out until the end of the audio data in a radio file is analyzed, processing proceeds to steps S114 and beyond.

When processing proceeds to step S114, the chapter start time, reproduction content, and genre information about a radio file, which constitute the metadata for the chapter management information, have already been collected with the radio file separated into chapters; however, the title and artist information have not been collected. Steps S114 and beyond are performed to collect the metadata about the title and artist. Therefore, in step S114, a control process is performed for connecting the personal computer 1 (radio-file-ready application 14a) to the song search server 3 through the network 101.

When the connection to the song search server 3 is established by performing the above step, the next step (step S115) is performed to select a chapter, in accordance with a predetermined rule, from song chapters associated with the reproduction content information indicating a song, which are among the chapters (chapters 1 to n) obtained through the aforementioned procedures. In the next step (step S116), a search request for a song in the chapter selected in step S115 is transmitted to the song search server 3. For search request transmission to the song search server 3, the beginning of the audio data constituting the song chapter selected in step S115 is transmitted as a search criterion.

Upon receipt of the search request transmitted in step S116, the song search server 3 conducts a search in a manner that was described earlier with reference to Procedures 5 and 6 in FIG. 1 (not indicated in the figure), retrieves the title and artist information about the song as a result of the search, and returns the title and artist information to the personal computer 1.

The personal computer 1 performs step S117 to receive the title and artist information, which was transmitted as the search result from the song search server 3 as described above. In the next step (step S118), the personal computer 1 retains the title and artist information, which were received and acquired, in association with the chapter number of the song chapter, which was selected as a search target in step S115. When this process is completed, the metadata about a song chapter (chapter start time, reproduction content, genre, title, and artist), which is necessary for chapter management information creation, is entirely readied.

After completion of step S118, step S119 is performed to determine whether or not a chapter targeted for a song search remains. In this step, for example, the total number of obtained song chapters is compared against the number of times the song search was repeated for a song chapter in steps S115 to S118. If the query in step S119 is answered "Yes," that is, if the judgment result obtained in step S119 indicates that a chapter targeted for a song search still remains, processing returns to step S115. If, on the other hand, the query in step S119 is answered "No," that is, if the judgment result obtained in step S119 indicates that the song search process is completed for all the song chapters, processing proceeds to step S120.

When processing proceeds to step S120, the entire chapter-specific metadata necessary for the chapter management information about the mth radio file has already been collected and retained in the RAM with the mth radio file subjected to chapter separation. Therefore, step S120 is performed to create and build the chapter management information for the mth radio file by using the information retained in the RAM. For example, an information unit is formed as chapter management information on the basis of the structure schematically shown in FIG. 5. Further, a set of metadata, which is structured as the chapter management information, is retained in the RAM. The chapter management information created in this manner may also be written on the HDD 14 of the personal computer 1 for storage purposes. The reason is that, when, for instance, the radio files acquired in step S101 and the chapter management information concerning the radio files are stored on the HDD 14, the radio-file-ready application 14a, which runs, for instance, on the personal computer 1, can manage the radio files on an individual chapter basis by exercising a function that is equivalent to or better than the function of the mobile terminal device, which will be described later.

After completion of step S120, step S121 is performed to determine whether or not variable m is maximized (full). The maximum value of variable m is equal to the total number of radio files acquired in step S101. More specifically, step S121 is performed to determine whether or not the chapter separation (audio analysis process), song search, and chapter management information creation processes have been completed for all the radio files acquired in step S101.

If the query in step S121 is answered "No," processing returns to step S103 after incrementing variable m in step S122. Steps S103 and beyond are then performed to process the next radio file. When all the radio files are completely processed, the query in step S121 is answered "Yes" so that processing proceeds to step S123.

When processing proceeds to step S123, the chapter management information about each radio file acquired in step S101 has already been created and retained in the RAM. Therefore, step S123 is performed to transmit the chapter management information to the mobile terminal device 2.

FIG. 6 merely shows an example of a procedure that the radio-file-ready application 14a installed on the personal computer 1 follows to create the chapter management information about the radio files.

An alternative would be to skip step S123 and transmit the chapter management information to the mobile terminal device 2 immediately after it is created in step S120.

In the example shown in FIG. 6, the personal computer 1 performs an audio analysis process on a radio file, separates the radio file into song chapters and talk chapters, acquires the genre information, and accesses the song search server 3 to obtain the title and artist information about the song chapters. Further, the personal computer 1 repeats the above sequence for each targeted radio file. An alternative would be to let the personal computer 1 perform the audio analysis process on each targeted radio file to separate the radio files into chapters and acquire the genre information, and then let the personal computer 1 acquire the title and artist information about the song chapters in each targeted radio file.

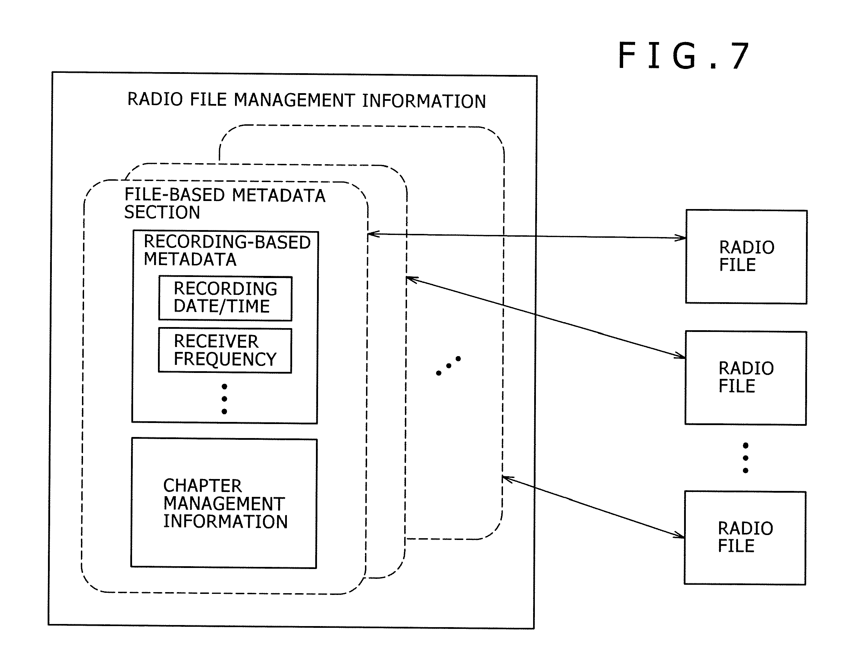

The mobile terminal device 2, which has received and acquired the chapter management information transmitted from the personal computer 1 as described above, creates the radio file management information, which has a structure that is schematically shown in FIG. 7, by using, for instance, the chapter management information, and stores the created radio file management information, for instance, in the storage section 33.

The radio file management information shown in the figure includes a set of file-based metadata sections (content data management information). Each file-based metadata section is associated with a radio file that is stored in the same storage section 33. Each file-based metadata section includes recording time related metadata and chapter management information (interval related information). The recording time related metadata includes predefined information that is collected at the time of recording of the associated radio file. FIG. 7 indicates that the recording time related metadata includes, for instance, a recording date/time and receiver frequency. The recording date/time is the information about a date and time at which the audio recording of a radio broadcast, which is the source of a radio file, was started. The receiver frequency is the frequency at which the radio broadcast, which is the source of the radio file, was received.

The chapter management information within the file-based metadata section has a structure that is shown, for instance, in FIG. 5, and is obtained when the chapter management information transmitted from the personal computer 1 is received.

Consequently, the mobile terminal device 2 can manage the radio files stored in the storage section 33 as described later by using the radio file management information shown in FIG. 7.

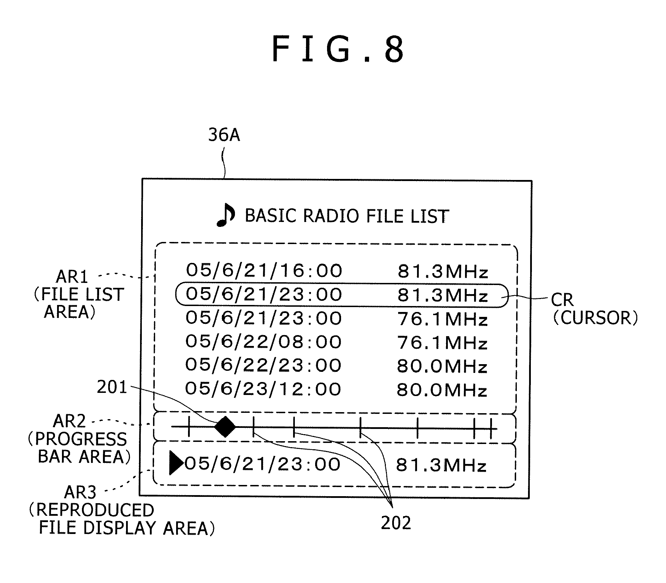

First of all, FIGS. 8 to 13 will be referenced to outline how the mobile terminal device 2 exercises radio file management. FIGS. 8 to 13 show typical contents of a display screen section 36A of the display section 36, which vary with a selected radio file management mode.

FIG. 8 shows typical contents of a basic radio file list, which is a basic list screen indicating a list of radio files stored in the storage section 33.

The basic radio file list includes a file list area AR1. The file list area AR1 includes a plurality of lines, which are arranged in vertical direction. Each line in the file list area AR1 shows the recording date/time and receiver frequency of a radio file. In the first line, for example, the title "05/6/21/16:00 81.3MHz" is displayed. It means that the recording of the associated radio file started on June 21, 2005 at 16:00. The radio files are stored by recording audio that is obtained by receiving a radio broadcast. Therefore, the radio files cannot be recorded in association with a radio broadcast name unless the information about the radio broadcast name is acquired by some means. Consequently, the present embodiment uses a character string including a recording date/time and receiver frequency as the title of a radio file. The title can also be used, for instance, as an initial file name that is to be set at the beginning of recording.

A cursor CR is displayed within the file list area AR1. The cursor CR can be moved from one radio file line to another. FIG. 8 indicates that the cursor CR is positioned in the second line from the top, which reads "05/6/21/23:00 81.3MHz."

For example, the user can move the cursor CR to a desired file line in the file list area AR1 by manipulating a key in the operating section 38. The file list area AR1 shows up to six radio file tiles (six lines) at a time. If more than six radio files exist, the list screen can be scrolled upward or downward to view all the radio files. The list screen can be scrolled by placing the cursor CR in the highest or lowest line and performing a procedure for moving the cursor CR upward or downward.

When a reproduction start procedure is performed with the cursor CR placed over the title of a desired radio file, the reproduction of the desired radio file starts.

A progress bar area AR2 is positioned below the file list area AR1. While a radio file is being reproduced, a reproduction position pointer 201 in the progress bar area AR2, for example, moves from left to right along a horizontal progress bar in accordance with the progress of reproduction.

Further, chapter separation lines 202, which are vertical lines indicating a boundary between adjacent chapters, are displayed over the progress bar in the progress bar area AR2 according to the present embodiment. Thus, the progress bar informs the user of the chapters in a radio file and the progress of radio file reproduction. It is preferred, for example, that the color, thickness, or pattern of the progress bar, which is divided by the chapter separation lines 202, be varied to distinguish between song chapters and talk chapters although such is not indicated in FIG. 8. This enables the user to visually recognize the contents of the chapters.

A reproduced file display area AR3 is displayed below the progress bar area AR2. While a radio file is being reproduced, the reproduced file display area AR3 shows a title that indicates a currently reproduced radio file.

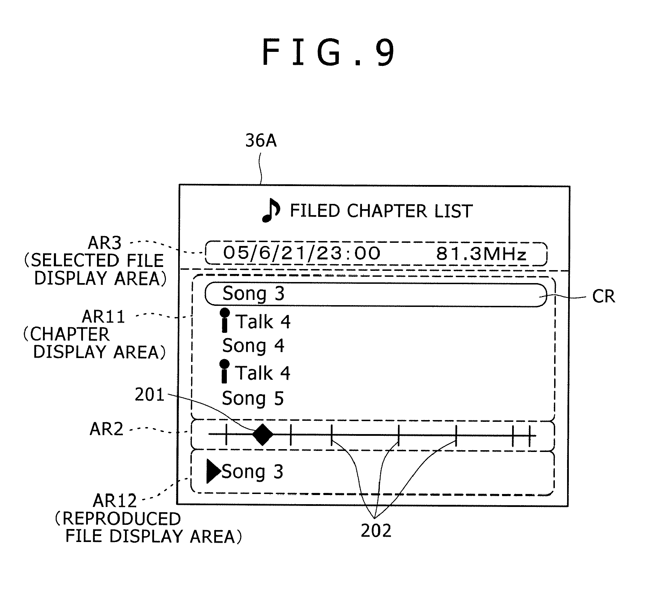

When, for instance, a predetermined procedure is performed with a certain radio file title selected from the file list area AR1 in the basic radio file list shown in FIG. 8 (e.g., with the cursor CR positioned over a certain radio file title), a screen shown in FIG. 9 opens to let the user view the chapters of the selected radio file (a filed chapter list).

A selected file display area AR3 is positioned in the uppermost section of a filed chapter list screen, which is shown in FIG. 9. The selected file display area AR3 shows the title of the radio file whose chapters are displayed in the filed chapter list screen. A chapter display area AR11, for example, is positioned below the selected file display area AR3.

The chapter display area AR11 shows the chapters contained in the radio file indicated in the selected file display area AR3. The chapter display area AR11 lists the chapters contained in the radio file. Each line in the chapter display area AR11 displays one chapter. From the top line to the bottom, the displayed chapters are arranged in the order of chapters in the radio file. The titles of the listed chapters are indicated, for instance, in the "Song 3, Talk 4, Song 4, Talk 5, Song 5, ..." form from upper to lower lines, as shown in FIG. 9. More specifically, song chapters are titled in the "Song (number)" form. The song chapters are numbered in ascending order (e.g., Song 1, Song 2, Song 3, Song 4, Song 5, ...) in accordance with radio file reproduction time. Talk chapters are titled in the "Talk (number)" form. The talk chapters are numbered in ascending order (e.g., Talk 1, Talk 2, Talk 3, Talk 4, Talk 5, ...) in accordance with radio file reproduction time. The song chapters and talk chapter, which are titled as described above, are then arranged and displayed from the top line to the bottom in accordance with radio file reproduction time. In this instance, the displayed song chapter titles are in the most basic form, that is, without a song title and artist name that are retrieved through a song search and contained in the chapter management information.

The cursor CR is also displayed within the chapter display area AR11 of the filed chapter list as is the case with the file list area AR1, which is shown in FIG. 8. Therefore, a desired chapter can be selected by moving the cursor CR. When a reproduction start procedure is performed with a certain chapter selected, the reproduction of the selected chapter starts from its beginning.

The progress bar area AR2 is displayed below the chapter display area AR11 as is the case with the basic radio file list, which is shown in FIG. 8.

A reproduced chapter display area AR12 is positioned below the progress bar area AR2 to indicate the title of a currently reproduced chapter.

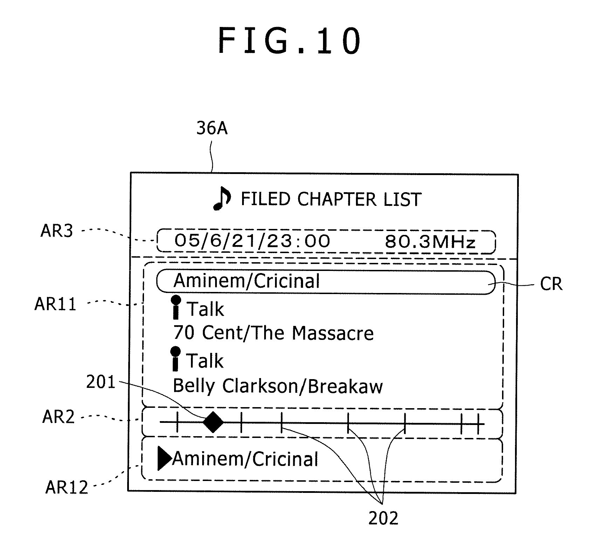

If the metadata about the title and artist of a song chapter is obtained as the chapter management information (file-based metadata section), the filed chapter list looks like FIG. 10 instead of FIG. 9. Contents of the screen shown in FIG. 10 are assigned the same reference numerals and not described if they are the same as the counterparts of the screen shown in FIG. 9.

More specifically, the song chapters displayed in the chapter display area AR11 are indicated in the "artist name/song title" form and not in the "Song (number)" form. Accordingly, while a song chapter is being reproduced, the reproduced chapter display area AR12 also indicates the currently reproduced chapter in the "artist name/song title" form.

The chapter management information (file-based metadata section) according to the present embodiment includes genre information as metadata. The genre information can be used to exercise radio file management as described below.

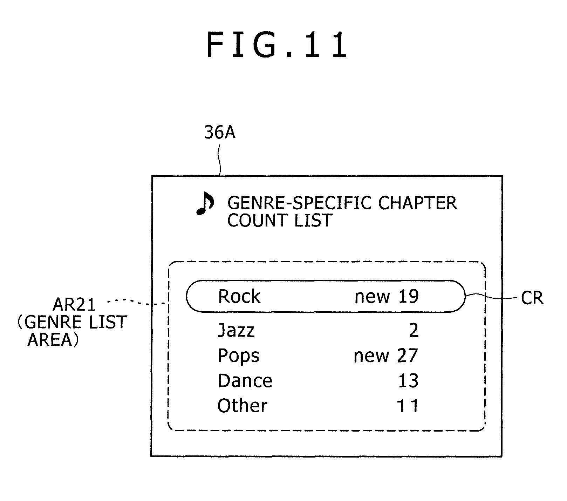

When, for instance, a predetermined procedure is performed in relation to the mobile terminal device 2, the display screen section 36A shows a genre-specific chapter count list that looks like FIG. 11.

A genre list area AR21 is displayed in the genre-specific chapter count list. In the genre list area AR21, each line represents a particular genre and indicates the number of song chapters that fall in the particular genre. For example, the genre-specific chapter count list shown in FIG. 11 indicates that a total of 19 song chapters fall in the "Rock" genre. It means that the radio files stored in the storage section 33 contain 19 "Rock" song chapters with which the "Rock" genre metadata is associated in a situation where all the radio files with which the chapter management information (file-based metadata section) having valid genre metadata is associated are separated into chapters. In other words, the indicated genre-specific chapter count is not the total number of chapters in a single radio file but is the total number of chapters in a plurality of radio files as described above. The word "New," which is displayed to the right of the "Rock" or "Pops" genre, indicates that one or more unreproduced chapters exist.

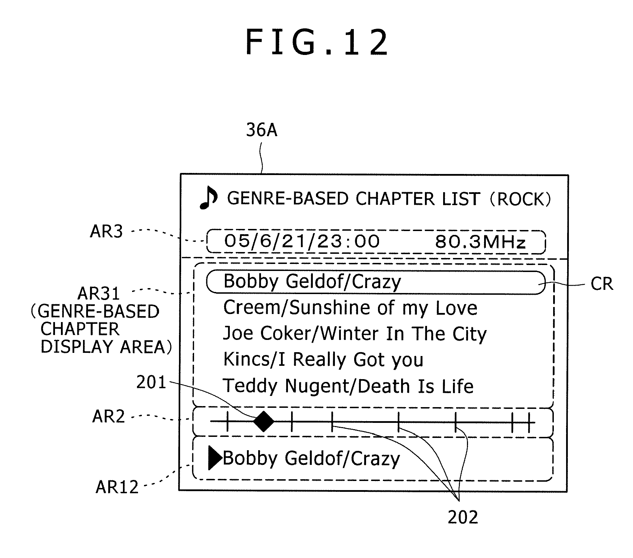

In this genre list area AR21, too, the cursor CR can be moved and placed over any genre. In other words, any genre can be selected by moving the cursor. When, for instance, the user selects the "Rock" genre, which is displayed in the highest line within the genre list area AR21 shown in the figure, and finalizes the selection, the contents of the display screen section 36A change from the genre-specific chapter count list, which is shown in FIG. 11, to a genre-based chapter list, which is shown in FIG. 12.

The genre-based chapter list, which is shown in FIG. 12, lists in a genre-based chapter display area AR31 the chapters that fall in the "Rock" genre, which was selected as indicated in FIG. 11. FIG. 12 shows a case where the genre-based chapter display area AR31 lists song chapters in the "artist name/song title" form.

In the genre-based chapter display area AR31, too, the cursor CR is displayed and can be moved to vertically scroll through listed song chapters. For example, a desired song chapter listed in the genre-based chapter display area AR31 can be selected by placing the cursor CR over it. The selected file display area AR3 is positioned above the genre-based chapter display area AR31. The selected file display area AR3 shows the title of a radio file containing a song chapter that is currently selected by placing the cursor CR over it as described above.

When, for instance, the user selects a song chapter as described above and performs a reproduction start procedure, the reproduction of the selected song chapter begins.

The progress bar area AR2 and reproduced chapter display area AR12 are positioned below the genre-based chapter display area AR31.

When a song chapter is selected and reproduced while the genre-based chapter list shown in FIG. 12 is displayed, song chapters are reproduced in the order irrelevant to a radio file list containing the reproduced song chapter. For example, the song chapters are reproduced in the order of song chapter listings in the genre-based chapter display area AR31. In other words, the song chapters that exist in various radio files and fall in the "Rock" genre are sequentially reproduced in accordance with a predetermined rule.

Accordingly, the progress bar area AR2 in FIG. 12 indicates the progress of reproduction of song chapters displayed in the genre-based chapter display area AR31.

In the above instance, the reproduced chapter display area AR12 indicates a currently reproduced song chapter in the "artist name/song title" form, as is indicated in FIG. 10.

When a procedure is performed while a genre-based list is displayed as shown in FIG. 11 or 12, song chapters falling in a user's favorite genre can be selected from song chapters constituting a radio file. Further, the user can specify one of the selected song chapters as desired, reproduce it, and listen to it.

Further, the mobile terminal device 2 according to the present embodiment can use artist metadata to exercise radio file management in a manner similar to the one indicated in FIG. 11 or 12.

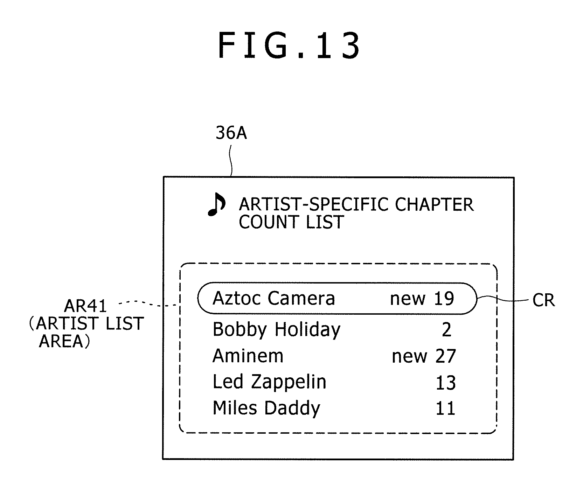

More specifically, when a predetermined procedure is performed in relation to the mobile terminal device 2, the display screen section 36A shows an artist-specific chapter count list as shown in FIG. 13.

An artist list area AR41 in the artist-specific chapter count list shows the number of song chapters of each artist. The cursor CR is positioned in the artist list area AR41. When the user selects a desired artist, which is displayed in the artist list area AR41, by placing the cursor CR over it, and finalizes the selection, an artist-based chapter list appears in a manner similar to the one indicated in FIG. 12.

In the artist-based chapter list, an artist-based chapter display area, which is a display area for listing song chapters of a selected artist, is positioned instead of the genre-based chapter display area AR31. The selected file display area AR3, progress bar area AR2, and reproduced chapter display area AR12 are the same as indicated in FIG. 12.

A reproduction start procedure can be performed after moving the cursor to select a desired song chapter from song chapters displayed in the artist-based chapter display area. The displayed song chapters are not reproduced in the order in which the song chapters are arranged in a radio file, but are reproduced in the order in which the song chapters are arranged in the artist-based chapter display area. In this instance, the progress bar area AR2 indicates the progress of reproduction, which is conducted in the order in which the song chapters are arranged in the artist-based chapter display area.

As is obvious from the description given with reference to FIGS. 8 to 13, the present embodiment enables the mobile terminal device 2 to manage the radio files stored in the storage section 33 on an individual chapter basis (since the radio files are separated into song chapters and talk chapters) by using the radio file management information (including the chapter management information shown in FIG. 5), which is a set of the file-based metadata sections described earlier with reference to FIG. 7. In other words, the progress bar in the progress bar area AR2, which is displayed, for instance, in the screens shown in FIGS. 8 to 13, can indicate the progress of reproduction of radio file data.

Further, the details of the contents of a radio file can be presented on an individual chapter basis as indicated in FIGS. 9 and 10.

Furthermore, a plurality of radio files can also be managed on an individual chapter basis in accordance, for instance, with genre and artist metadata as described with reference to FIGS. 11 to 13. Particularly, the management method indicated in FIGS. 11 to 13 is exercised as if the chapters constituting a radio file are handled as files.

In the past, too, audio data was managed in accordance with genre, artist, and other metadata. However, such audio data management was exercised on an individual file basis, and was not exercised in relation to divisions of a file unlike the present embodiment, which exercises audio data management on an individual chapter basis. The present embodiment provides increased convenience for content data management and enhanced entertaining capabilities because it makes it possible to exercise audio data (content data) management in relation to divisions of a file.

Further, the present embodiment obtains chapters of an audio data file (content file) as a result of audio analysis. This ensures that management can be eventually exercised on an individual chapter basis by performing, for instance, the procedure described with reference to FIG. 1 even if chapter-based metadata or the like is not added as source data for a content file stored in the storage section 33. The present embodiment assumes that the metadata permitting chapter-specific management is not broadcast when, for instance, the radio file to be subjected to audio analysis is radio broadcast.

Even if a source contains chapter-related metadata, a system configuration for processing the metadata contained in the source needs to be formed to manage content data through the use of the metadata. Forming such a system configuration may result in poor versatility. The present embodiment, on the other hand, does not cause the above problem and provides wide versatility because it obtains chapter-related metadata by analyzing actual data (audio data in the case of the present embodiment) of a content file.

A typical technical configuration for implementing radio file (chapter) management, which is exercised as described with reference to FIGS. 8 to 13, will now be described.

As is obvious from the preceding description, the mobile terminal device 2 according to the present embodiment can exercise radio file management on an individual chapter basis because it builds and retains radio file management information as indicated in FIG. 7.

When opening one of the list screens shown in FIGS. 8 to 13, the mobile terminal device 2 according to the present embodiment creates required table information as needed through the use of the radio file management information, references the created table information, and determines the contents to be displayed.

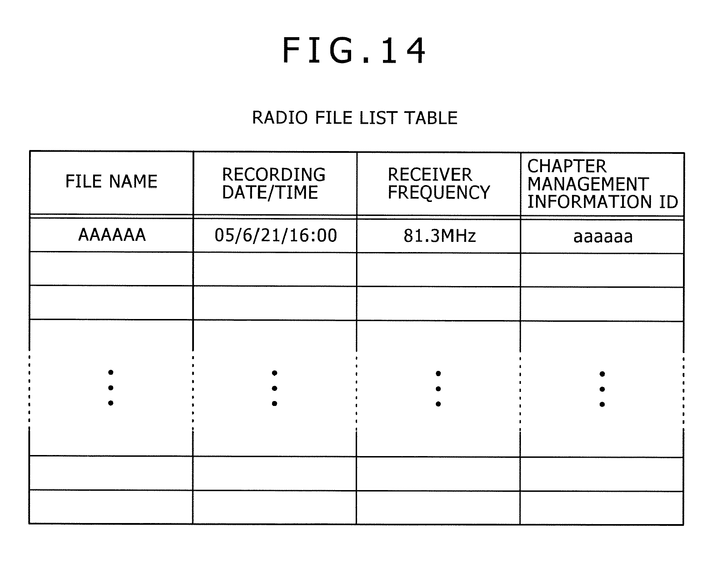

When the basic radio file list screen shown in FIG. 8 or the filed chapter list screen shown in FIGS. 9 and 10 is to be opened as a list screen, a radio file list table shown in FIG. 14 is created at first and retained, for instance, in the RAM.

The radio file list table shown in FIG. 14 shows information about each radio file. The information includes a file name, recording date/time, receiver frequency, and chapter management information. The chapter management information relates to a radio file that is structured as shown in FIG. 5. A chapter management information ID, which is identification information unique to each piece of chapter management information, is given to each piece of chapter management information in order to associate a radio file in the radio file list table with a particular piece of chapter management information. On that basis, the file name, recording date/time, receiver frequency, and chapter management information ID are associated with each radio file.

For example, titles can be displayed in the file list area AR1 of the basic file list shown in FIG. 8 by using the recording date/time and receiver frequency information in the radio file list table. When a procedure is performed in relation to the basic radio file list to select and reproduce a certain radio file, the radio file list table should be searched for a file name that matches the radio file selected in the file list area AR1. Further, an instruction for reproducing the file having the retrieved file name should be issued to the file system.

As regards the display in the progress bar area AR2, which is shown in FIGS. 8 to 10, the chapter separation lines 202 can be set by referencing the chapter start time for each chapter within the chapter management information associated with a radio file that is listed in the radio file list table and targeted for reproduction. The display position of the reproduction position pointer 201 can be set in accordance with a result of comparison between the radio file reproduction time and current reproduction time.

When the filed chapter list opens as indicated in FIG. 9 or 10, the contents of the chapter display area AR11 can be displayed by referencing the chapter management information about a target radio file in the radio file list table shown in FIG. 14.

As regards the chapter display area AR11 in the filed chapter list shown in FIG. 9, for example, the associated reproduction content is referenced in the ascending order of the chapter number for target chapter management information related to the radio file list, and title setup is performed in accordance with the reproduction content in the "Song (number)" or "Talk (number)" form. If, for instance, the reproduction content of chapter No. 1 is a talk, this chapter is a talk chapter in a radio file and the first talk chapter to be reproduced. Therefore, "Talk 1" is set as its title. If the reproduction content of chapter No. 2 is a song, this chapter is a song chapter in the radio file and the first song chapter to be reproduced. Therefore, "Song 1" is set as its title. If the reproduction content of chapter No. 3 is also a song, this chapter is a song chapter in the radio file and the second song chapter to be reproduced. Therefore, "Song 2" is set as its title. When the titles of the chapters constituting a radio file are set in the above manner, the contents of the file list area AR1 can be displayed by using the characters of the titles.

As regards the chapter display area AR11 in the filed chapter list shown in FIG. 10, the reproduction content is first referenced when processing is performed in the ascending order of the chapter number for target chapter management information related to the radio file list. If the reproduction content represents a talk chapter, "Talk" is set as its title. If the reproduction content represents a song chapter, a check is performed to determine whether valid information about the title and artist for the chapter number is registered. If such valid information is registered, the title and artist information is used to set title characters that are to be displayed in the chapter display area AR11. If, such valid information is not registered, on the other hand, a title character string such as "Song" is set.

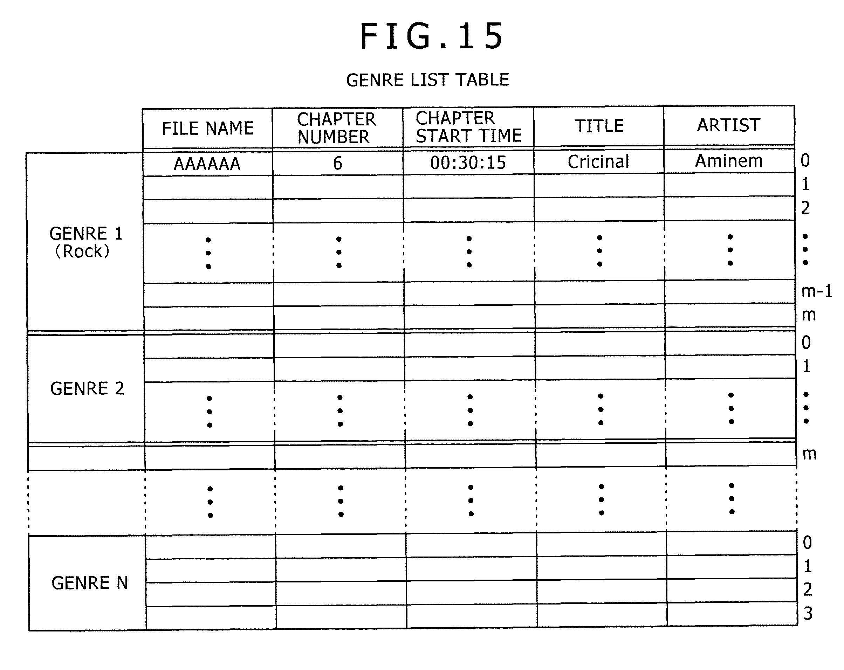

When the genre-specific chapter count list, which is shown in FIG. 11, or the genre-based chapter list, which relates to a particular genre and is shown in FIG. 12, is to be displayed, a genre list table, which is structured as shown, for instance, in FIG. 15, is created in accordance with the radio file management information and retained.

First of all, the genre list table shown in FIG. 15 is roughly divided according to the genre. Here, for the sake of brevity, the contents of the genre list table are divided into various genre numbers (genres 1 to N). In reality, however, these genre numbers correlate to Rock, Pops, Jazz, or other particular genre that is defined by the genre metadata contained in the radio file management information. For each of the song chapters (song chapters 0 to m) falling in a particular genre, the associated file name, chapter number, chapter start time, title, and artist information are stored. In other words, the genre list table is composed of list information that is obtained when a database of radio file management information is reconstructed according to the genre.

The genre-specific chapter count list, which is shown, for instance, in FIG. 11, can be displayed by referencing the genre list table shown in FIG. 15 and determining the number of chapters stored in association with each genre.

The titles of song chapters in the genre-based chapter display area AR31 of the genre-based chapter list shown in FIG. 12 can be displayed by using the title and artist metadata about the song chapters falling in the selected genre.

When the user performs a procedure for selecting a song chapter from the genre-based chapter list shown in FIG. 12 and reproducing the selected song chapter, for example, the file name and chapter start time of the selected song chapter are referenced. This makes it possible to control the file system, access a data position, which is indicated by the chapter start time, within a radio file containing the song chapter, and start reproducing the song chapter. In other words, the selected song chapter can be reproduced from its beginning.

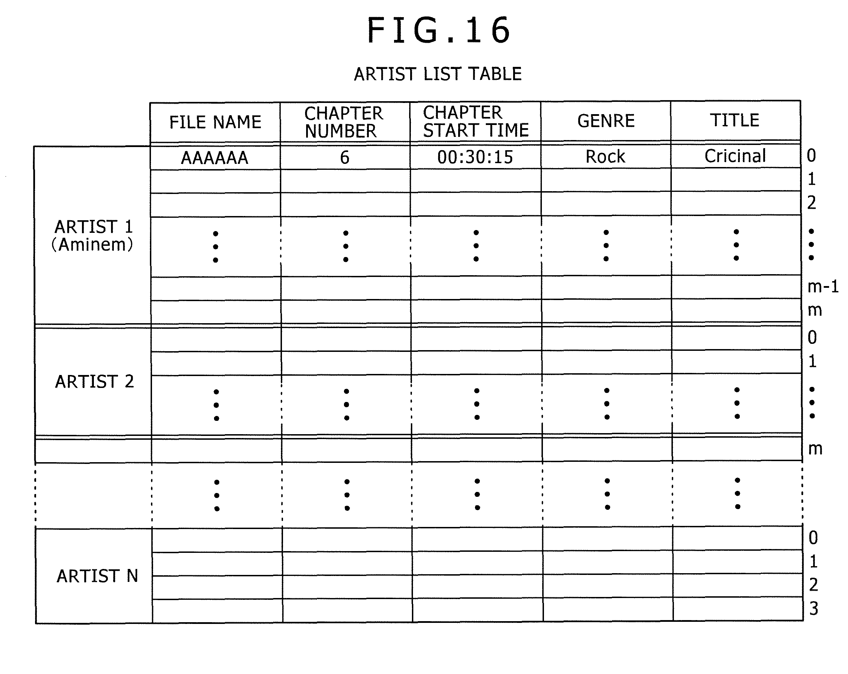

When the artist-specific chapter count list, which is shown in FIG. 13, or the artist-based chapter list, which is similar to the list shown in FIG. 12, is to be displayed, an artist list table that is structured as shown, for instance, in FIG. 16 is created in accordance with the radio file management information and retained.

The contents of the artist list table shown in FIG. 16 are also divided into various artists (artists 1 to N). The fields in which an artist number (between 1 and N) is displayed actually stores information that represents a particular artist. As regards each artist, the associated file name, chapter number, chapter start time, genre, and artist information are stored for each of the song chapters (song chapters 0 to m) with which the metadata indicating a particular artist is associated. Therefore, the artist list table is composed of list information that is obtained when a database of radio file management information is reconstructed according to the artist.

The artist-specific chapter count list, which is shown, for instance, in FIG. 13, can be displayed by referencing the artist list table shown in FIG. 16 and determining the number of chapters stored in association with each artist.

The titles of song chapters in the artist-based chapter display area of the artist-based chapter list, which looks like FIG. 12, can be displayed by using the title metadata about the song chapters related to the selected artist.

When the user performs a procedure for selecting a song chapter from the artist-based chapter list and reproducing the selected song chapter, the file name and chapter start time of the selected song chapter should be referenced as is the case with the genre-based chapter list.

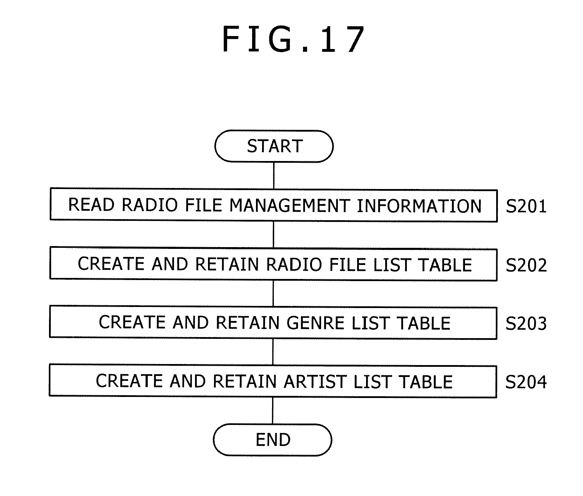

In the present embodiment, the radio file list table, genre list table, and artist list table shown in FIGS. 14 to 16 are created when, for instance, the mobile terminal device 2 starts up and retained in the RAM. FIG. 17 is a flowchart illustrating a procedure that is performed to create and retain the above three list tables.

When, for instance, the power for the mobile terminal device 2 turns on, the control section 37 in the mobile terminal device 2 performs step S201 to read the radio file management information from the storage section 33. In the next step (step S202), the read radio file management information is used, for instance, to create the radio file list table at first and retain the created radio file list table, for instance, in the RAM provided in the control section 37.

In the subsequent steps (steps S203 and S204), the radio file management information is used to create the genre list table and artist list table and retain the created tables in the RAM.

Since the radio file list table, genre list table, and artist list table are created and retained at the time of startup as described above, one of the list screens described with reference to FIGS. 8 to 13 can be displayed by creating list screen display image data through the use of the associated list table, which is retained, and outputting the created image data.

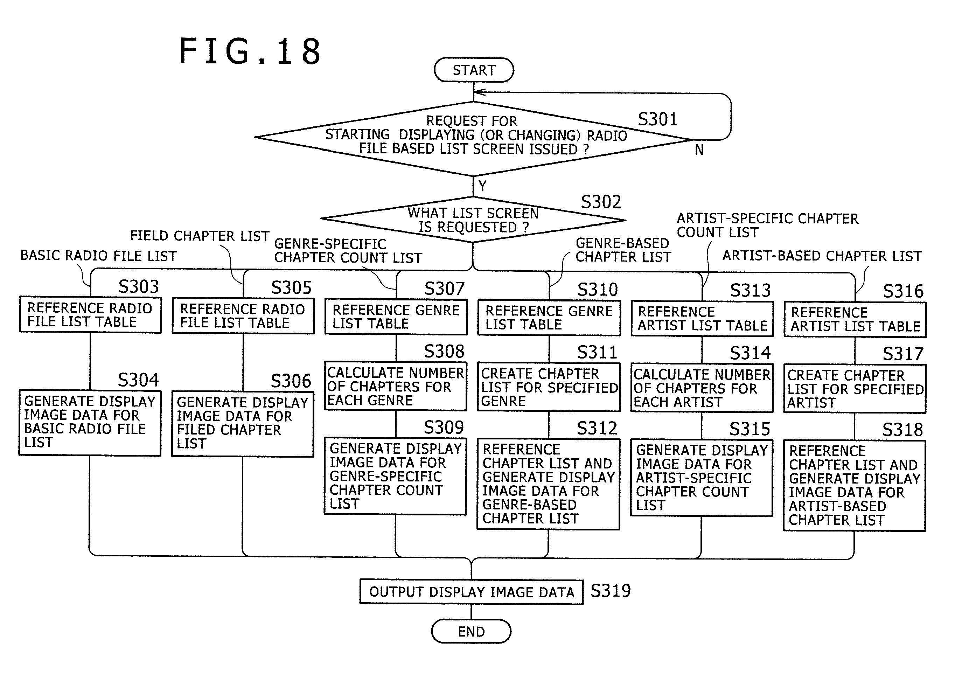

FIG. 18 is a flowchart illustrating a typical procedure that the control section 37 performs to display a list screen.

Step S301, which is the first step shown in FIG. 18, is followed to wait until, for instance, the user performs a procedure to issue a request for starting displaying a radio file based list screen, which is described with reference to one of FIGS. 8 to 13, or a request for changing the displayed list screen. When it is determined that such a request is received, processing proceeds to steps S302 and beyond.

Step S302 is performed to determine what list screen is requested. If the obtained judgment result indicates that the basic radio file list, which is shown in FIG. 8, is requested, steps S303 and S304 are performed.

Step S303 is performed to reference the radio file list table, which was created through the procedure indicated in FIG. 17 and is retained in the RAM. Step S304 is then performed to generate display image data for the basic radio file list by using required information that is stored in the radio file list table as described earlier with reference to FIG. 14. For example, the recording date/time and receiver frequency character strings, which are displayed to represent the titles of radio file entries in the file list area AR1, are generated in accordance with the recording date/time and receiver frequency information stored in the radio file list table.

If the judgment result obtained in step S302 indicates that the filed chapter list is requested, steps S305 and S306 are performed.

Step S305 is performed to reference the radio file list table retained in the RAM. In the next step (step S306), required information stored in the RAM is used to generate display image data for the filed chapter list.

If the judgment result obtained in step S302 indicates that the genre-specific chapter count list is requested, steps S307 to S309 are sequentially performed.

Step S307 is performed to reference the genre list table stored in the RAM. Step S308 is then performed to acquire the number of chapters stored in the genre list table on an individual genre basis. In accordance with the genre-specific chapter count information acquired in step S308, step S309 is performed to generate display image data for the genre-specific chapter count list.

If the judgment result obtained in step S302 indicates that the genre-specific chapter count list is requested, steps S307 to S309 are sequentially performed.

Step S307 is performed to reference the genre list table stored in the RAM. Step S308 is then performed to acquire the number of chapters stored in the genre list table on an individual genre basis. In accordance with the genre-specific chapter count information acquired in step S308, step S309 is performed to generate display image data for the genre-specific chapter count list.

If the judgment result obtained in step S302 indicates that the genre-based chapter list is requested, steps S310 to S312 are sequentially performed.

Step S310 is performed to reference the genre list table stored in the RAM. If a request for displaying the genre-based chapter list is issued in this instance, it means that a certain genre is selected from the previously displayed genre-specific chapter count list. In the next step (step S311), therefore, the information that is stored in the genre list table and related to the selected genre is used to create a chapter list. In step S312, the created chapter list is mainly used to generate display image data for the genre-based chapter list.

If the judgment result obtained in step S302 indicates that the artist-specific chapter count list is requested, steps S313 to S315 are sequentially performed.

Step S313 is performed to reference the artist list table retained in the RAM. Step S314 is then performed to acquire the number of chapters stored in the artist list table on an individual artist basis. In accordance with the artist-specific chapter count information acquired in step S314, step S315 is performed to generate display image data for the artist-specific chapter count list.

If the judgment result obtained in step S302 indicates that the artist-based chapter list is requested, steps S316 to S318 are sequentially performed.

Step S316 is performed to reference the artist list table stored in the RAM. If a request for displaying the artist-based chapter list is issued, it means that a certain artist is selected from the previously displayed artist-specific chapter count list. In step S317, therefore, the information that is stored in the artist list table and related to the selected artist is used to create a chapter list. In step S318, the created chapter list is mainly used to generate display image data for the artist-based chapter list.

When steps S301 to S318 are performed as described above, the display image data for requested list screens are generated. The control section 37 exercises display control so that the display section 36 displays an image in accordance with the generated display image data. This ensures that an appropriate list screen opens as exemplified in FIGS. 8 to 13.

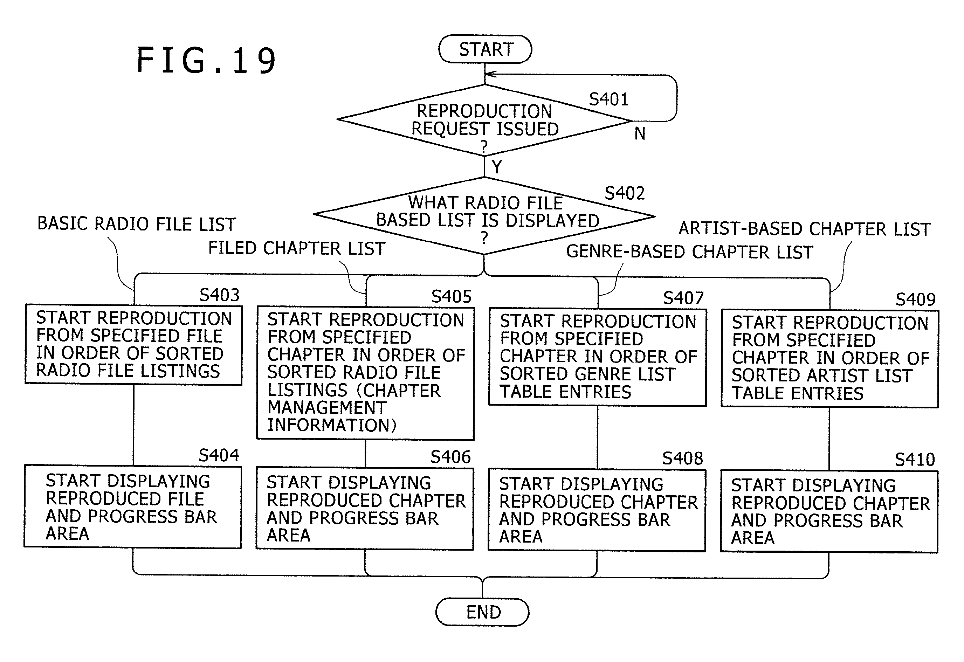

A typical radio file reproduction procedure that is performed when a reproduction instruction is issued in relation to a list screen displayed as described above will now be described with reference to a flowchart in FIG. 19.

Step S401, which is the first step shown in FIG. 19, is followed to wait until, for instance, the user performs a procedure to issue a request for specifying and reproducing a radio file or chapter while a radio file based list screen is displayed. When such a reproduction request is received, processing proceeds to steps S402 and beyond.

Step S402 is performed to determine what list screen is displayed when the reproduction request is received. If the obtained judgment result indicates that the basic radio file list, which is shown in FIG. 8, is displayed, steps S403 and S404 are performed.

Step S403 is performed to reference the radio file list (FIG. 14), access the requested radio file, and start reproducing it. After the reproduction of the requested radio file is ended, a subsequent radio file reproduction operation is sequentially performed in a file sort order (reproduction order) that is set in accordance with predefined information in the radio file list. It is conceivable that reproducing radio files in a file sort order (reproduction order) may be equal, for instance, to reproducing radio files in order from the oldest recording to the newest recording.

Step S404 is followed to start displaying relevant information, which is necessary during radio file reproduction, immediately after step S403, which is initiated to start reproducing a file. Step S404 is performed, for instance, to display the title of a currently reproduced radio file in the reproduced file display area AR3 for the currently displayed basic radio file list and move the reproduction position pointer displayed in the progress bar area AR2 in accordance with the progress of reproduction.

If the judgment result obtained in step S402 indicates that the filed chapter list shown in FIG. 9 or 10 is displayed, steps S405 and S406 are performed.

In the above instance, the reproduction request received in step S401 relates to a chapter in a selected radio file. Therefore, step S405 is performed to reference the chapter management information about the associated radio file in the radio file list (FIG. 14) and recognize the chapter start time for the requested chapter. In accordance with the chapter start time, a data position in the storage section 33 that corresponds to the chapter start time in the selected radio file can be accessed. Data is then read from the accessed position to start a reproduction operation. This ensures that the reproduction operation starts from the beginning of a specified chapter. When a reproduction sequence is to be continuously followed after termination of the reproduction of the specified chapter, the next chapter in the same radio file is reproduced in a reproduction order that is based on chapter numbers indicated by the associated chapter management information.

The next step (step S406) is performed, for instance, to display the title of a currently reproduced chapter in the reproduced chapter display area AR12 for the currently displayed filed chapter list and move the reproduction position pointer displayed in the progress bar area AR2 in accordance with the progress of reproduction.

If the judgment result obtained in step S402 indicates that the genre-based chapter list shown in FIG. 12 is displayed, steps S407 and S408 are performed. It should be noted in this connection that a chapter reproduction instruction (or radio file reproduction instruction) cannot be issued by performing a procedure in relation to the genre-specific chapter count list shown in FIG. 11.

Step S407 is performed to reference the genre list table (FIG. 15), access the storage section 33 in accordance with the file name and chapter start time for the requested chapter, and start a reproduction operation. This ensures that the reproduction operation starts from the beginning of the requested chapter.

After the reproduction of the chapter is terminated, the next chapter falling in the same genre is determined and reproduced in a reproduction order that is based on predefined metadata (e.g., titles and artists) in the genre list table. If the genre list table contains, for instance, the recording date/time of the associated radio file, the chapters can be reproduced in a reproduction order that is based on the recording date/time.

The next step (step S408) is performed, for instance, to display the title of a currently reproduced chapter in the reproduced chapter display area AR12 for the currently displayed genre-based chapter list and move the reproduction position pointer displayed in the progress bar area AR2 in accordance with the progress of reproduction.

If the judgment result obtained in step S402 indicates that the artist-based chapter list, which looks like FIG. 12, is displayed, steps S407 and S408 are performed. It should be noted in this connection that a chapter reproduction instruction (or radio file reproduction instruction) cannot be issued by performing a procedure in relation to the artist-specific chapter count list shown in FIG. 11.

Step S407 is performed to reference the artist list table (FIG. 15), access the storage section 33 in accordance with the file name and chapter start time for the requested chapter, and start a reproduction operation. This ensures that the reproduction operation starts from the beginning of the requested chapter.

After the reproduction of the chapter is terminated, the next chapter related to the same artist is determined and reproduced in a reproduction order that is based on predefined metadata (e.g., titles and artists) in the artist list table. If the artist list table contains, for instance, the recording date/time of the associated radio file, the chapters can be reproduced in a reproduction order that is based on the recording date/time.

The next step (step S408) is performed, for instance, to display the title of a currently reproduced chapter in the reproduced chapter display area AR12 for the currently displayed artist-based chapter list and move the reproduction position pointer displayed in the progress bar area AR2 in accordance with the progress of reproduction.

The description given with reference to FIG. 17 assumes that the list table information for the radio file list table, genre list table, and artist list table is created when the mobile terminal device 2 starts up. Alternatively, however, such list table information may be created as needed when, for instance, the chapter list screen changes. Referring to FIG. 19, for example, an alternative would be to create the radio file list before performing step S403 or S405 subsequently to step S402, create the genre list table before performing step S407 subsequently to step S402, and create the artist list table before performing step S409 subsequently to step S402. In the above instance, the associated list table information may be created repeatedly before performing step S403, S405, S407, or S409. Another alternative would be to create the list table information, store the created list table information in the RAM or the like, and use the stored list table information subsequently. This alternative method eliminates the necessity for creating the list table information each time it is demanded.

The processing steps indicated in FIGS. 17 to 19 are performed when the CPU, which is included in the control section 37 of the mobile terminal device 2, executes a radio file management program that is stored in the storage section 33 or in the ROM, which is also included in the control section 37.

The above-mentioned program may be written in the ROM or storage section 33 for storage purposes when, for instance, the mobile terminal device 2 is manufactured. An alternative would be to store the program, for instance, on a removable storage medium, and later install the program, for instance, via the communication bus 100 through the use of the storage medium. Another alternative would be to store the program, for instance, in a networked server, download the program from the server via the network 101, and install the downloaded program. The radio-file-ready application 14a, which is to be stored on the HDD 14 of the personal computer 1, can also be acquired in the same manner as described above.

The present invention is not limited to the configuration that has been described in accordance with the present embodiment. First of all, the structures of the management information and table information, which are shown in FIGS. 5, 7, 14, 15, and 16 and used to manage the radio files on an individual chapter basis, and the metadata to be contained are not limited to those described in conjunction with the present embodiment.

The various list screens, which are shown, for instance, in FIGS. 8 to 12, and related to the radio files, may be displayed in a manner different from those described in conjunction with the present embodiment. Further, the various list screens may be manipulated in a manner different from those described in conjunction with the present embodiment.

Furthermore, the radio files that are handled on an individual chapter basis may be managed in a manner different from those described in conjunction with the present embodiment. For example, the chapters in one or more radio files may be sorted for simpler management purposes so as to first arrange only song chapters for reproduction purposes and then arrange only talk chapters for reproduction purposes (an alternative is to arrange the talk chapters for reproduction purposes prior to the song chapters). Alternatively, a reproduction list may be created so as to arrange only the song chapters, for instance, of each radio file while excluding the talk chapters.

The embodiment described so far assumes that the mobile terminal device 2 records the radio files and manages the radio files on an individual chapter basis through the use of the radio file management information while the personal computer 1, which serves as a host, creates the chapter management information on which the radio file management information is based, performs an audio analysis process for chapter management information creation, and conducts a song search. However, the functions can be assigned to the system components in a different manner. For example, the embodiment described so far assumes that the mobile terminal device 2 receives and acquires the radio file management information, and creates the radio file list table, genre list table, and artist list table from the radio file management information for actual radio file management purposes. Alternatively, however, the personal computer 1 may create the list table information for the radio file list table, genre list table, and artist list table (the personal computer 1 can create the list table information if the associated metadata is transmitted to the personal computer 1 at the time of recording to let the personal computer 1 acquire the recording date/time and receiver frequency information) and transfer the created list table information (radio file list table, genre list table, and artist list table) to the mobile terminal device 2 together with the radio file management information for storage purposes. In this instance, the mobile terminal device 2 does not have to create list management information. Consequently, the processing load on the mobile terminal device 2 decreases.

The present invention may also be configured so that a single device completes a radio file recording operation, an audio analysis process for chapter management information creation, a song search, and a radio file management operation that is performed on an individual chapter basis in accordance with the radio file management information.

The embodiment described so far assumes that the audio data derived from radio broadcast recordings is to be managed. However, the present invention may be used to manage the audio data derived from the other sources. Further, the present invention may also be used to manage content other than audio data. For example, the present invention may be used to manage data files containing video and audio. In this instance, an image analysis process may be performed in addition to the audio analysis process to perform chapter setup in accordance with a wide variety of reproduction content types.

It should be understood by those skilled in the art that various modifications, combinations, subcombinations, and alterations may occur depending on design requirements and other factors insofar as they are within the scope of the appended claims or the equivalents thereof.

## Claims

1. An information processing system comprising:
a storage section (33) configured to store content data;
a separation section (11) configured to perform an analysis process on the content data stored in the storage section and separate the content data into interval data accordingly;
an interval related information generation section configured to generate interval related information, which describes the interval data that constitutes the content data;
a control section (37) configured to exercise control so that the storage section stores content data related information containing at least one of pieces of the interval related information in association with content data; and
a content data management section configured to manage the content data stored in the storage section in accordance with the content data related information.

2. The information processing system according to claim 1, wherein the interval related information generation section generates interval related information that includes separation position information, which indicates content data separation positions determined by the analysis process performed by the separation section, and predefined attribute information, which is associated with interval data.

3. The information processing system according to claim 1 or 2, further comprising
a reproduction section configured to reproduce data,
wherein the content data management section exercises management so that the interval data constituting content data can be independently reproduced on an individual interval data basis, and
wherein the reproduction section reproduces the interval data.

4. The information processing system according to claim 1, 2 or 3,
wherein the content data management section manages the interval data in accordance with particular attribute information associated with the interval data, and
wherein the control section exercises control so as to extract interval data having particular attribute information.

5. The information processing system according to one of the claims 1 to 4, further comprising
a radio reception section configured to receive a radio broadcast,
wherein the control section exercises control so that the storage section stores radio broadcast audio data acquired by the radio reception section as the content data.

6. The information processing system according to one of the claims 1 to 5, further comprising:
a terminal device (2); and
a host device (1) that is connected to the terminal device via a communication path,
wherein the terminal device (2) includes
the storage section (33),
a data transmission section (32) configured to transmit content data stored in the storage section (33) to the host device (1) via the communication path,
an information acquisition section configured to receive and acquire the interval related information that is transmitted from the host device via the communication path,
the control section (37), and
the content data management section; and
wherein the host device (1) includes
a data acquisition section (18) configured to receive and acquire content data that is transmitted from the terminal device via the communication path,
the separation section (11),
the interval related information generation section, and
an information transmission section configured to transmit the interval related information, which is generated by the interval related information generation section, via the communication path.

7. The information processing system according to claim 6,
wherein the terminal device further includes
the radio reception section; and
wherein the control section exercises control so that the storage section stores radio broadcast audio data acquired by the radio reception section as the content data.

8. A terminal device (2) comprising:
a communication section (32) configured to communicate with a host device via a communication path;
a storage section (33) configured to store content data;
a data transmission control section configured to exercise control so that the communication section transmits content data stored in the storage section to the host device;
an information acquisition section configured to receive and acquire interval related information that is transmitted from the host device in accordance with a result of separation of content data into interval data based on kinds of the content data, the content data being transmitted from the host device and
transmitted by the data transmission control section;
a control section (37) configured to exercise control so that the storage section stores content data related information, which includes at least one piece of interval related information acquired by the information acquisition section, in association with content data; and
a content data management section configured to manage the content data stored in the storage section in accordance with the content data related information.

9. An information processing method comprising the steps of:
separating, by analyzing content data stored in a storage section, the content data into interval data accordingly;
generating interval related information, which describes the interval data that constitutes the content data;
exercising control so that storage section stores content data related information containing at least one of pieces of the interval related information in association with content data; and
managing the content data stored in the storage section in accordance with the content data related information.

10. An information processing method comprising the steps of:
communicating with a host device via a communication path;
exercising control so as to transmit content data stored in a storage section;
receiving and acquiring interval related information that is transmitted from the host device in accordance with a result of separation of content data into interval data based on kinds of the content data, the content data being transmitted from the host device and
transmitted in the data transmission control step; exercising control so that the storage section stores content data related information, which includes at least one piece of interval related information acquired in the information acquisition step, in association with content data; and
managing the content data stored in the storage section in accordance with the content data related information.

11. A program for causing an information processing device to execute a method comprising the steps of:
communicating with a host device via a communication path;
exercising control so as to transmit content data stored in a storage section;
receiving and acquiring interval related information that is transmitted from the host device in accordance with a result of separation of content data into interval data based on kinds of the content data, the content data being transmitted from the host device and
transmitted in the data transmission control step; exercising control so that the storage section stores content data related information, which includes at least one piece of interval related information acquired in the information acquisition step, in association with content data; and
a content data management step of managing the content data stored in the storage section in accordance with the content data related information.

12. An information processing system comprising:
storage means for storing content data;
separation means for performing an analysis process on the content data stored in the storage means and
separate the content data into interval data accordingly;
interval related information generation means for generating interval related information, which describes the interval data that constitutes the content data;
control means for exercising control so that the storage means stores content data related information containing at least one of pieces of the interval related information in association with content data; and
content data management means for managing the content data stored in the storage means in accordance with the content data related information.
